(19) Europäisches Patentamt / European Patent Office / Office européen des brevets

(11) **EP 4 383 845 A1**

(12) **EUROPEAN PATENT APPLICATION**
published in accordance with Art. 153(4) EPC

(43) Date of publication:
**12.06.2024 Bulletin 2024/24**

(21) Application number: **21952441.0**

(22) Date of filing: **06.08.2021**

(51) International Patent Classification (IPC):
**H04W 52/36** (2009.01)

(52) Cooperative Patent Classification (CPC):
**H04W 52/36**

(86) International application number:
**PCT/CN2021/111317**

(87) International publication number:
**WO 2023/010568 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Hersina, Günter et al**
**Schoppe, Zimmermann, Stöckeler**
**Zinkler, Schenk & Partner mbB**
**Patentanwälte**
**Radlkoferstrasse 2**
**81373 München (DE)**

(54) **METHOD AND APPARATUS FOR REPORTING POWER HEADROOM REPORT, USER EQUIPMENT, BASE STATION AND STORAGE MEDIUM**

(57) The present disclosure belongs to the technical field of communications, and provides a method and apparatus for reporting a power headroom report (PHR), a user equipment (UE), a base station and a storage medium. The method comprises: receiving configuration information sent by a base station, the configuration information indicating that a UE supports reporting of PHRs of single or multiple TRPs on one carrier; receiving power control parameters supporting at least one TRP which corresponds to at least one carrier and which is sent by the base station; receiving a PHR reporting trigger condition of the at least one TRP sent by the base station; and on the basis of the power control parameters and the reporting trigger condition, triggering PHR reporting of at least two TRPs corresponding to each carrier. Embodiments of the present disclosure provide a PHR reporting method suitable for a multi-TRP scenario, which ensures the effective allocation of network resources.

FIG. 1

configuration information transmitted by a base station is received — 101

a power control parameter of at least one TRP corresponding to at least one carrier transmitted by the base station is received — 102

a trigger condition for PHR reporting corresponding to at least one TRP transmitted by the base station is received — 103

PHR reporting of at least two TRPs corresponding to each carrier is triggered based on the power control parameter and the trigger condition for reporting — 104

**Description**

**TECHNICAL FIELD**

The present disclosure relates to a field of communication technologies, and particularly to a method and an apparatus for reporting a power headroom report, a user equipment, a base station, and a storage medium.

**BACKGROUND**

In a communication system, a UE (user equipment) usually needs to report a PHR (power headroom report) to meet network scheduling requirements. In related technologies, the UE reports the PHR based on a power control parameter and a trigger condition for PHR reporting.

However, when the UE is configured to support multiple TRP (transmission reception point) transmission, if the UE reports a PHR to the network, the network may not be able to know an association relationship between the reported PHR and different power control parameters, nor can it know an association relationship between TRPs and PHRs, which affects uplink scheduling of the UE, resulting in ineffective allocation of network resources. Therefore, there is an urgent need for a PHR reporting method suitable for the multi-TRP scenario.

**SUMMARY**

The present disclosure provides a method and an apparatus for reporting a power headroom report, a user equipment, a base station, a core network equipment and a storage medium, in order to propose a PHR reporting method applicable to a Multi-TRP scenario.

In an aspect of embodiments of the present disclosure, there is provided a method for reporting the power headroom report. The method is applied to a UE, and includes:

receiving configuration information transmitted by a base station, in which the configuration information instructs the UE to support power headroom report PHR reporting of one or more transmission and reception points TRPs on one carrier;
receiving a power control parameter of at least one TRP corresponding to at least one carrier transmitted by the base station;
receiving a trigger condition for PHR reporting of at least one TRP transmitted by the base station; and
triggering PHR reporting of at least two TRPs corresponding to each carrier based on the power control parameter and the trigger condition for reporting.

In another aspect of embodiments of the present disclosure, there is provided a method for reporting a power headroom report. The method is applied to a base station, and includes:

transmitting configuration information to a UE, in which the configuration information instructs the UE to support PHR reporting of one or more TRPs on one carrier;
transmitting a power control parameter of at least one TRP corresponding to at least one carrier to the UE;
transmitting a trigger condition for reporting of at least one TRP to the UE; and
receiving PHRs of at least two TRPs corresponding to each carrier transmitted by the UE.

In yet another aspect of embodiments of the present disclosure, there is provided an apparatus for reporting a power headroom report. The apparatus includes:

a receiving module, configured to receive configuration information transmitted by a base station, in which the configuration information instructs the UE to support power headroom report PHR reporting of one or more TRPs on one carrier;
the receiving module is further configured to receive a power control parameter of at least one TRP corresponding to at least one carrier transmitted by the base station; and
the receiving module is further configured to receive a trigger condition for PHR reporting of at least one TRP transmitted by the base station; and
a reporting module, configured to trigger PHR reporting of at least two TRPs corresponding to each carrier based on the power control parameter and the trigger condition for reporting.

In yet another aspect of embodiments of the present disclosure, there is provided an apparatus for reporting a power headroom report. The apparatus is applied to a base station, and includes:

> a transmitting module, configured to transmit configuration information to a UE, in which the configuration information instructs the UE to support PHR reporting of one or more TRPs on one carrier;
> the transmitting module is further configured to transmit a power control parameter of at least one TRP corresponding to at least one carrier to the UE; and
> the transmitting module is further configured to transmit a trigger condition for PHR reporting of at least one TRP to the UE; and
> a receiving module, configured to receive PHRs of at least two TRPs corresponding to each carrier transmitted by the UE.

In yet another aspect of embodiments of the present disclosure, there is provided a user equipment. The UE includes: a transceiver; a memory; a processor connected to the transceiver and the memory respectively. The processor is configured to control wireless signal transmission and reception of the transceiver and to enable implementing the method proposed in the aspect of the embodiments, by executing computer-executable instructions on the memory.

In yet another aspect of embodiments of the present disclosure, there is provided a base station. The base station includes: a transceiver; a memory; a processor connected to the transceiver and the memory respectively. The processor is configured to control wireless signal transmission and reception of the transceiver, and to enable implementing the method proposed in another aspect of the embodiments, by executing computer-executable instructions on the memory.

In yet another aspect of the present disclosure, there is provided a computer storage medium. The storage medium stores computer-executable instructions that, when executed by a processor, enable implementing the above mentioned method.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

Additional aspects and advantages of the present disclosure will be set forth in part in the description which follows, and in part will be obvious from the description, or may be learned by practice of the present disclosure.

## BRIEF DESCRIPTION OF THE DRAWINGS

The above and/or additional aspects and advantages of the present disclosure will become apparent and understandable from the following description of the embodiments in conjunction with the accompanying drawings.

> FIG. 1 is a schematic flowchart of a method for reporting a power headroom report provided by an embodiment of the present disclosure.
> FIG. 2 is a schematic flowchart of a method for reporting a power headroom report provided by another embodiment of the present disclosure.
> FIG. 3a is a schematic flowchart of a method for reporting a power headroom report provided by another embodiment of the present disclosure.
> FIG. 3b is a schematic diagram of a reporting format of an MAC-CE of each PHR in a case of single TRP transmission provided by an embodiment of the present disclosure.
> FIG. 3c is a schematic diagram of a reporting format of an MAC-CE of each PHR in a case of multiple TRP transmission and the number of cells less than or equal to 8 provided by an embodiment of the present disclosure.

FIG. 3d is a schematic diagram of a reporting format of an MAC-CE of each PHR in a case of multiple TRP transmission and the number of cells greater than 8 according to an embodiment of the present disclosure.

FIG. 4a is a schematic flowchart of a reporting method for a power headroom report provided by another embodiment of the present disclosure.

FIG. 4b is a schematic diagram of a reporting format of MAC-CE of each PHR in a case of single TRP transmission provided by an embodiment of the present disclosure.

FIG. 4c is a schematic diagram of a reporting format of MAC-CE of each PHR in a case of multiple TRPs transmission and the number of cells less than or equal to 8 provided by an embodiment of the present disclosure.

FIG. 4d is a schematic diagram of a reporting format of the MAC-CE of each PHR in a case of multiple TRP transmission and the number of cells greater than 8 provided by an embodiment of the present disclosure.

FIG. 5 is a schematic flowchart of a method for reporting a power headroom report provided by another embodiment of the present disclosure.

FIG. 6a is a schematic flowchart of a reporting method for a power headroom report provided by another embodiment of the present disclosure.

FIG. 6b is a schematic diagram of a reporting format of a PHR MAC-CE in a case of single TRP transmission provided by an embodiment of the present disclosure.

FIG. 6c is a schematic diagram of a reporting format of a PHR MAC-CE in a case of multiple TRPs transmission and the number of cells less than or equal to 8 provided by an embodiment of the present disclosure.

FIG. 6d is a schematic diagram of the reporting format of a PHR MAC-CE in a case of multiple TRPs transmission and the number of cells greater than 8 provided by an embodiment of the present disclosure.

FIG. 7a is a schematic flowchart of a method for reporting a power headroom report provided by another embodiment of the present disclosure.

FIG. 7b is a schematic diagram of another reporting format of a PHR MAC-CE in a case of single TRP transmission provided by an embodiment of the present disclosure.

FIG. 7c is a schematic diagram of another reporting format of a PHR MAC-CE in a case of multiple TRPs transmission and the number of cells less than or equal to 8 provided by an embodiment of the present disclosure.

FIG. 7d is a schematic diagram of a reporting format of a PHR MAC-CE in a case of multiple TRP transmission and the number of cells greater than 8 provided by an embodiment of the present disclosure.

FIG. 8 is a schematic flowchart of a method for reporting a power headroom report provided by yet another embodiment of the present disclosure.

FIG. 9 is a schematic flowchart of a method for reporting a power headroom report provided by yet another embodiment of the present disclosure.

FIG. 10 is a schematic flowchart of a method for reporting a power headroom report provided by yet another embodiment of the present disclosure.

FIG. 11 is a schematic flowchart of a method for reporting a power headroom report provided by yet another embodiment of the present disclosure.

FIG. 12 is a schematic flowchart of a method for reporting a power headroom report provided by yet another embodiment of the present disclosure.

FIG. 13 is a schematic flowchart of a method for reporting a power headroom report provided by yet another embodiment of the present disclosure.

FIG. 14 is a schematic flowchart of a method for reporting a power headroom report provided by yet another embodiment of the present disclosure.

FIG. 15 is a schematic flowchart of a method for reporting a power headroom report provided by yet another embodiment of the present disclosure.

FIG. 16 is a schematic flowchart of a method for reporting a power headroom report provided by yet another embodiment of the present disclosure.

FIG. 17 is a schematic structural diagram of an apparatus for reporting a power headroom report provided by another embodiment of the present disclosure.

FIG. 18 is a schematic structural diagram of an apparatus for reporting a power headroom report provided by another embodiment of the present disclosure.

FIG. 19 is a block diagram of a user equipment provided by an embodiment of the present disclosure.

FIG. 20 is a block diagram of a base station provided by an embodiment of the present disclosure.

## DETAILED DESCRIPTION

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the present disclosure. Rather, they are merely examples of apparatuses and methods consistent with aspects of the disclosed embodiments as recited in the appended claims.

Terms used in the embodiments of the present disclosure are for the purpose of describing specific embodiments only, and are not intended to limit the embodiments of the present disclosure. As used in the examples of the present disclosure and the appended claims, the singular forms "a" and "this" are also intended to include the plural unless the context clearly dictates otherwise. It should also be understood that the term "and/or" as used herein refers to and includes any and all possible combinations of one or more of the associated listed items.

It should be understood that although the embodiments of the present disclosure may use the terms first, second, third, etc. to describe various information, the information should not be limited to these terms. These terms are only used to distinguish information of the same type from one another. For example, without departing from the scope of the embodiments of the present disclosure, first information may also be called second information, and similarly, second information may also be called first information. Depending on the context, the words "if' and "whenever" as used herein may be interpreted as "upon" or "when" or "in response to determining that".

Embodiments of the present disclosure are described in detail below, examples of which are illustrated in the accompanying drawings, where like or similar reference numerals designate like or similar elements throughout. The embodiments described below by referring to the figures are exemplary and are intended to explain the present disclosure and should not be construed as limiting the present disclosure.

In a method, apparatus, user equipment and storage medium for reporting a power headroom report provided by embodiments of the present disclosure, the UE will receive a power control parameter of at least one TRP corresponding to at least one carrier and a trigger condition for PHR reporting of at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

A method, an apparatus, a user equipment, a base station, a core network equipment, and a storage medium for reporting a power headroom report provided by the present disclosure will be described in detail below with reference to the accompanying drawings.

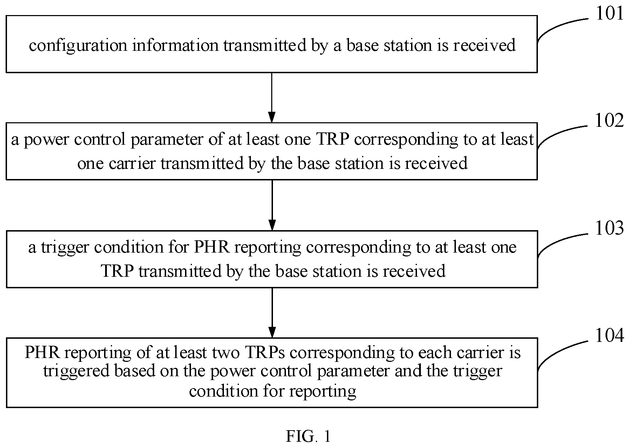

FIG. 1 is a schematic flowchart of a method for reporting a power headroom report provided by an embodiment of the present disclosure. The method is applied to a UE. As shown in FIG. 1, the method for reporting a power headroom report may include the following steps.

Step 101, configuration information transmitted by a base station is received.

It should be noted that the indication method in the embodiment of the present disclosure is applicable to any UE. A UE may be a device that provides voice and/or data connectivity to a user. The UE can communicate with one or more core networks via RAN (Radio Access Network). The UE can be an Internet of Things terminal, such as a sensor device, a mobile phone (or called a "cellular" phone), and a computer having an Internet of Things terminal, such as a fixed, portable, pocket, hand-held, computer-built-in or vehicle-mounted device. For example, a station (STA), a subscriber unit, a subscriber station, a mobile station, a mobile, a remote station, an access point, a remote terminal, an access terminal, a user terminal, or a user agent. Alternatively, the UE may also be a device of an unmanned aerial vehicle. Alternatively, the UE may also be a vehicle-mounted device, for example, it may be a trip computer with a wireless communication function, or a wireless terminal connected externally to the trip computer. Alternatively, the UE may also be a roadside device, for example, it may be a street lamp, a signal lamp, or other roadside devices with a wireless communication function.

In an embodiment of the present disclosure, the method of the embodiment of the present disclosure may be adapted to a multi-TRP scenario.

In an embodiment of the present disclosure, the above configuration information may be configured to instruct the UE to support PHR reporting of one or more TRPs on one carrier.

It can be known that, the method in the embodiment of the present disclosure is specifically applied to a UE that supports reporting of one or more TRPs on one carrier in a multi-TRP scenario.

Step 102, a power control parameter of at least one TRP corresponding to at least one carrier transmitted by the base station is received.

In an embodiment of the present disclosure, each TRP may correspond to a power control parameter, and different TRPs may correspond to different power control parameters.

In an embodiment of the present disclosure, in the multi-TRP scenario, the process of the base station transmitting the power control parameter of the one or more TRPs to the UE through the one or more TRPs is relatively independent, and the independence of the TRPs enables better scheduling of resources in the multi-TRP scenario.

Further, in an embodiment of the present disclosure, the power control parameter may include at least one of:

first information corresponding to a TRP on the carrier; or
second information corresponding to the carrier.

Specifically, in an embodiment of the present disclosure, identity information corresponding to the TRP on the carrier in the above first information may include at least one of:

identity information corresponding to the TRP on the carrier;
identity information of a downlink path loss reference carrier corresponding to the TRP on the carrier;
a downlink path loss change corresponding to the TRP on the carrier;
an uplink power back-off change corresponding to the TRP on the carrier;
a PHR periodic reporting timer corresponding to the TRP on the carrier;
a PHR reporting prohibition timer corresponding to the TRP on the carrier;
an MPE (maximum permissible exposure) power threshold corresponding to the TRP on the carrier;
an MPE reporting prohibition timer corresponding to the TRP on the carrier;
an uplink MPE power back-off change corresponding to the TRP on the carrier; or
MPE FR2 (millimeter wave) reporting corresponding to the TRP on the carrier.

It should be noted that, in an embodiment of the present disclosure, the first information corresponding to the TRP on the carrier may include any one of the above. In another embodiment of the present disclosure, the first information corresponding to the TRP on the carrier may include any combination of the above.

In an embodiment of the present disclosure, the identity information corresponding to the TRP on the carrier in the first information may include at least one of:

an uplink physical channel identity of the TRP on the carrier;
a beam information identity of the TRP on the carrier;
an SRS (sounding reference signal) resource set identity of the TRP on the carrier;
a power control parameter set identity of the TRP on the carrier.

In an embodiment of the present disclosure, the above uplink physical channel may include at least one of:

a PUCCH (physical uplink control channel);
a PUSCH (physical uplink shared channel);
an SRS; or
a PRACH (physical random access channel).

Further, in an embodiment of the present disclosure, the above second information corresponding to the carrier may include at least one of:

identity information of a downlink path loss reference carrier corresponding to the carrier;
a downlink path loss change corresponding to the carrier;
an uplink power back-off change corresponding to the carrier;
a PHR periodic reporting timer corresponding to the carrier;
a PHR reporting prohibition timer corresponding to the carrier;
an MPE power threshold corresponding to the carrier;
an MPE reporting prohibition timer corresponding to the carrier;
an uplink MPE power back-off change corresponding to the carrier; or
MPE FR2 reporting corresponding to the carrier.

It should be noted that, in an embodiment of the present disclosure, the second information corresponding to the carrier may include any one of the above. In another embodiment of the present disclosure, the second information corresponding to the carrier may include any combination of the above.

Step 103, a trigger condition for PHR reporting corresponding to at least one TRP transmitted by the base station is received.

In an embodiment of the present disclosure, the trigger condition for reporting may include at least one of the following:

changing identity information corresponding to a TRP on the carrier;

changing a downlink path loss reference carrier corresponding to a TRP on the carrier;

changing a carrier for uplink physical channel transmission of a TRP on the carrier;

a timeout of a PHR periodic reporting timer corresponding to a TRP on the carrier;

a timeout of a PHR reporting prohibition timer corresponding to a TRP on the carrier, and an actual downlink path loss change corresponding to the TRP exceeding a downlink path loss change corresponding to the TRP on the carrier in the power control parameter;

a timeout of a PHR reporting prohibition timer corresponding to a TRP on the carrier, and an actual uplink power back-off change corresponding to the TRP exceeding an uplink power back-off change of the TRP on the carrier in the power control parameter;

a timeout of a PHR reporting prohibition timer corresponding to a TRP on the carrier, and an actual downlink path loss change corresponding to the TRP exceeding a downlink path loss change corresponding to the carrier in the power control parameter;

a timeout of a PHR reporting prohibition timer corresponding to a TRP on the carrier, and an actual uplink power back-off change corresponding to the TRP exceeding an uplink power back-off change corresponding to the carrier in the power control parameter;

a timeout of a PHR periodic reporting timer corresponding to the carrier;

a timeout of a PHR reporting prohibition timer corresponding to the carrier, and an actual downlink path loss change corresponding to the TRP exceeding a downlink path loss change corresponding to a TRP on the carrier in the power control parameter;

a timeout of a PHR reporting prohibition timer corresponding to the carrier, and an actual uplink power back-off change corresponding to the TRP exceeding an uplink power back-off change corresponding to a TRP on the carrier in the power control parameter;

a timeout of a PHR reporting prohibition timer corresponding to the carrier, and an actual downlink path loss change corresponding to the TRP exceeding a downlink path loss change corresponding to the carrier in the power control parameter;

a timeout of a PHR reporting prohibition timer corresponding to the carrier, and an actual uplink power back-off change corresponding to the TRP exceeding an uplink power back-off change corresponding to the carrier in the power control parameter;

changing a downlink path loss reference carrier corresponding to the carrier;

configuring MPE FR2 reporting corresponding to the TRP on the carrier, and an MPE power back-off change corresponding to the TRP exceeding an MPE power threshold corresponding to the TRP on the carrier in the power control parameter;

configuring MPE FR2 reporting corresponding to the TRP on the carrier, and an MPE power back-off change corresponding to the TRP exceeding an uplink MPE power back-off change corresponding to the TRP on the carrier in the power control parameter;

configuring MPE FR2 reporting corresponding to the TRP on the carrier, and an MPE power back-off change corresponding to the TRP exceeding an MPE power threshold corresponding to the carrier in the power control parameter;

configuring MPE FR2 reporting corresponding to the TRP on the carrier, and an MPE power back-off change corresponding to the TRP exceeding an uplink MPE power back-off change corresponding to the carrier in the power control parameter;

configuring MPE FR2 reporting corresponding to the carrier, and an MPE power back-off change corresponding to the TRP exceeding an MPE power threshold corresponding to the TRP on the carrier in the power control parameter;

configuring MPE FR2 reporting corresponding to the carrier, and an MPE power back-off change corresponding to the TRP exceeding an uplink MPE power back-off change corresponding to the TRP on the carrier in the power control parameter;

configuring MPE FR2 reporting corresponding to the carrier, and an MPE power back-off change corresponding to the TRP exceeding an MPE power threshold corresponding to the carrier in the power control parameter;

configuring MPE FR2 reporting corresponding to the carrier, and an MPE power back-off change corresponding to the TRP exceeding an uplink MPE power back-off change corresponding to the carrier in the power control parameter;

a timeout of an MPE reporting prohibition timer corresponding to the TRP on the carrier; or

a timeout of an MPE reporting prohibition timer corresponding to the carrier.

It should be noted that, in an embodiment of the present disclosure, the trigger condition for reporting may include any one of the above. In another embodiment of the present disclosure, the trigger condition for reporting may include any combination of the above.

Step 104, PHR reporting of at least two TRPs corresponding to each carrier is triggered based on the power control parameter and the trigger condition for reporting.

In an embodiment of the present disclosure, the UE may report a PHR of each TRP corresponding to each carrier to the base station.

The specific method for reporting by the UE the PHR of each TRP in each carrier to the base station will be introduced in subsequent embodiments.

In addition, it should be noted that in an embodiment of the present disclosure, in addition to reporting the PHR of each TRP of each carrier to the base station, the UE may also report PHRs of multiple TRPs corresponding to each carrier to the base station. The number of TRPs reported is less than the number of TRPs in the corresponding carrier, and the TRPs reporting the PHRs may specifically be TRPs with relevant information being changed. The relevant information may include at least one of identity information corresponding to the TRP, a downlink path loss reference carrier corresponding to the TRP, or a carrier for uplink physical channel transmission corresponding to the TRP.

For example, assuming that a certain carrier includes TRP-1, TRP-2, and TRP-3. When downlink path loss reference carriers of TRP-1 and TRP-2 are changed, PHRs of TRP-1 and TRP-2 may be reported to the base station.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

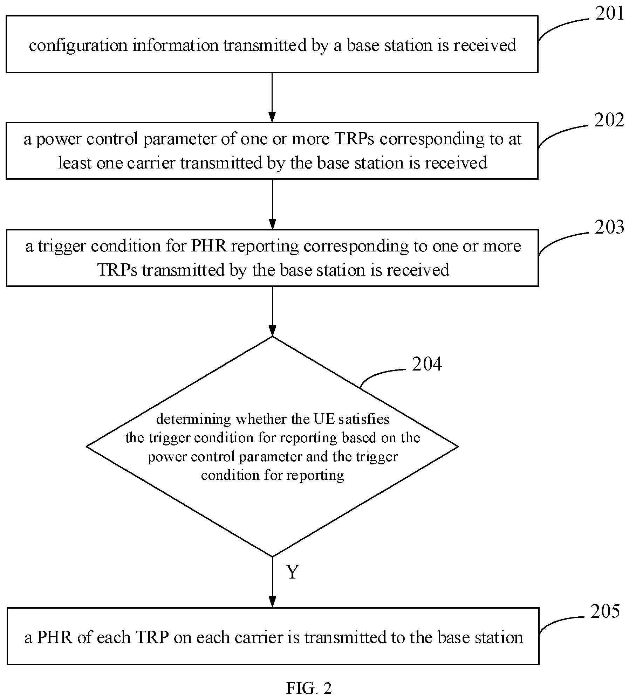

FIG. 2 is a schematic flowchart of a method for reporting a power headroom report provided by an embodiment of the present disclosure. The method is applied to a UE. As shown in FIG. 2, the method for reporting a power headroom report may include the following steps.

Step 201, configuration information transmitted by a base station is received.

Step 202, a power control parameter of one or more TRPs corresponding to at least one carrier transmitted by the base station is received.

Step 203, a trigger condition for PHR reporting corresponding to one or more TRPs transmitted by the base station is received.

Step 204, it is determined whether the UE satisfies the trigger condition for reporting based on the power control parameter and the trigger condition for reporting, and if so, step 202 is performed.

In an embodiment of the present disclosure, when the UE satisfies the trigger condition for reporting, it means that the PHR needs to be reported to the base station at present, and step 202 may be continued.

For relevant descriptions about steps 201-204, reference may be made to the above-mentioned embodiments, and details are not repeated in the embodiment of the present disclosure.

Step 202, a PHR of each TRP on each carrier is transmitted to the base station.

In an embodiment of the present disclosure, the method for transmitting the PHR of each TRP on each carrier to the base station may include: sorting each TRP on each carrier; sorting the PHR of each TRP according to a sorting order of the respective TRPs, and transmitting the PHR of each TRP sorted in order to the base station.

It should be noted that, in an embodiment of the present disclosure, the method for sorting each TRP in the above steps may include at least one of:

sorting each TRP according to a predefined sorting rule;
sorting each TRP according to a sorting rule provided by a protocol;
sorting each TRP according to a sorting rule configured/indicated by a network; or
autonomously sorting each TRP.

In an embodiment of the present disclosure, the above sorting rule may be, for example: an order specified in the transmission of each TRP when multiple TRPs are used for PUSCH transmission. In another embodiment of the present disclosure, the above sorting rule may be, for example: sorting each TRP based on the numbers of respective TRPs of each carrier in descending order. In yet another embodiment of the present disclosure, the above sorting rule may be, for example: sorting the TRPs based on numbers of the respective TRPs of each carrier from small to large.

Further, in an embodiment of the present disclosure, when the UE reports the PHR of each TRP on each carrier to the base station, the reported content of the PHR may include a relevant second power parameter. The relevant second power parameter may include at least one of:

in response to the carrier being configured with power back-off, reporting maximum transmit power of each TRP on the carrier after the power back-off in order;
in response to the carrier being configured with a PUSCH and the UE having a real PUSCH transmission, reporting a power headroom of each TRP after the real PUSCH transmission in order;
in response to the carrier being configured with a PUSCH and the UE having a real PUSCH transmission, reporting a power headroom of each TRP after reference PUSCH transmission in order;
in response to the carrier being configured with a PUSCH and the UE not having a real PUSCH transmission, reporting a power headroom of each TRP after reference PUSCH transmission in order;
in response to the carrier being configured with a PUCCH and the UE having a real PUCCH transmission, reporting a power headroom of each TRP after the real PUCCH transmission in order;
in response to the carrier being configured with a PUCCH and the UE having a real PUCCH transmission, reporting a power headroom of each TRP after reference PUCCH transmission in order;
in response to the carrier being configured with a PUCCH and the UE not having a real PUCCH transmission, reporting a power headroom of each TRP after reference PUCCH transmission in order;
in response to the carrier being configured with an SRS and the UE having a real SRS transmission, reporting a power headroom of each TRP after the real SRS transmission in order;
in response to the carrier being configured with an SRS and the UE having a real SRS transmission, reporting a power headroom of each TRP after reference SRS transmission in order;
in response to the carrier being configured with an SRS and the UE not having a real SRS transmission, reporting a power headroom of each TRP after reference SRS transmission in order;
in response to the carrier being configured with a PRACH and the UE having a real PRACH transmission, reporting a power headroom of each TRP after the real PRACH transmission in order;
in response to the carrier being configured with a PRACH and the UE having a real PRACH transmission, reporting a power headroom of each TRP after reference PRACH transmission in order;
in response to the carrier being configured with a PRACH and the UE not having a real PRACH transmission, reporting a power headroom of each TRP after reference PRACH transmission in order;
reporting a power back-off value of each TRP in order; or
a power back-off value of the UE.

In an embodiment of the present disclosure, the above-mentioned relevant second power parameter may include any one of the above. In another embodiment of the present disclosure, the above-mentioned relevant second power parameter may include any combination of the above.

Taking PUSCH as an example (PUCCH/SRS/PRACH are similar) to introduce the above-mentioned "real PUSCH transmission" and "reference PUSCH transmission".

In an embodiment of the present disclosure, "the power headroom after the real PUSCH transmission" means: the power headroom of the PUSCH after performing real transmission on the PUSCH.

In an embodiment of the present disclosure, "the power headroom after reference PUSCH transmission" means: when there is no real transmission on the PUSCH, but the power headroom of the PUSCH needs to be reported, at this time, the UE may determine a reference PUSCH based on an instruction of a network, and use a transmission format and a transmission parameter corresponding to the reference PUSCH to calculate the power headroom of the PUSCH or other channels that need to report PHR, and use and report the calculated power headroom as the power headroom of the PUSCH that needs PHR reporting.

Further, it should be noted that, in an embodiment of the present disclosure, on the basis that the reported content of the PHR includes the above-mentioned relevant second power parameter, the UE may also optionally add an identity of each TRP to the reported content of the PHR.

That is, in an embodiment of the present disclosure, when the UE reports the PHR, the reported content may include: the relevant second power parameter. In another embodiment of the present disclosure, when the UE reports the PHR, the reported content may include: the relevant second power parameters + an identity of each TRP arranged in order.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

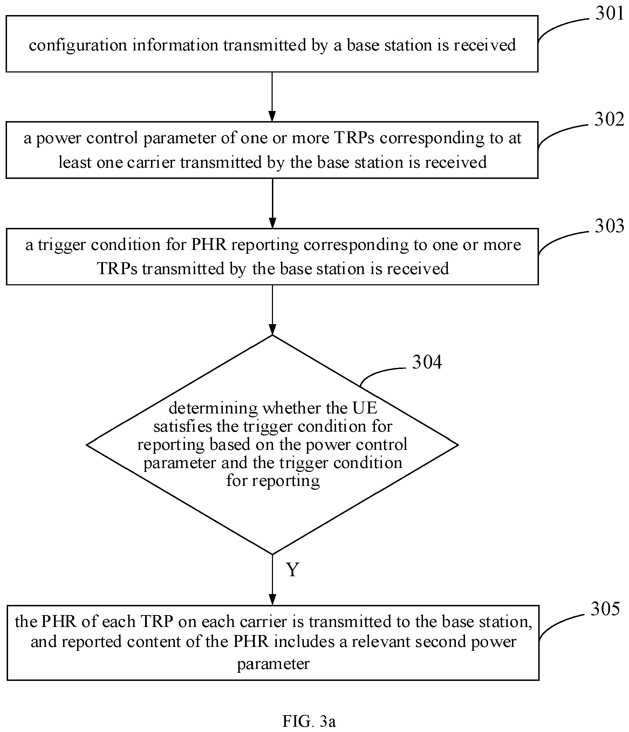

Fig. 3a is a schematic flowchart of a method for reporting a power headroom report provided by an embodiment of the present disclosure. The method is applied to a UE. As shown in Fig. 3a, the method for reporting a power headroom report may include the following steps.

Step 301, configuration information transmitted by a base station is received.

Step 302, a power control parameter of one or more TRPs corresponding to at least one carrier transmitted by the base station is received.

Step 303, a trigger condition for PHR reporting corresponding to one or more TRPs transmitted by the base station is received.

Step 304, it is determined whether the UE satisfies the trigger condition for reporting based on the power control parameter and the trigger condition for reporting, and if so, step 302 is performed.

In an embodiment of the present disclosure, when the UE satisfies the trigger condition for reporting, it means that the PHR needs to be reported to the base station at present, and step 302 may be continued.

For relevant descriptions about steps 301-304, reference may be made to the above-mentioned embodiments, and details are not repeated in the embodiment of the present disclosure.

Step 302, the PHR of each TRP on each carrier is transmitted to the base station, and reported content of the PHR includes a relevant second power parameter.

In an embodiment of the present disclosure, the relevant second power parameter may include at least one of:

in response to the carrier being configured with power back-off, reporting maximum transmit power of each TRP on the carrier after the power back-off in order;

in response to the carrier being configured with a PUSCH and the UE having a real PUSCH transmission, reporting a power headroom of each TRP after the real PUSCH transmission in order;

in response to the carrier being configured with a PUSCH and the UE having a real PUSCH transmission, reporting a power headroom of each TRP after reference PUSCH transmission in order;

in response to the carrier being configured with a PUSCH and the UE not having a real PUSCH transmission, reporting a power headroom of each TRP after reference PUSCH transmission in order;

in response to the carrier being configured with a PUCCH and the UE having a real PUCCH transmission, reporting a power headroom of each TRP after the real PUCCH transmission in order;

in response to the carrier being configured with a PUCCH and the UE having a real PUCCH transmission, reporting a power headroom of each TRP after reference PUCCH transmission in order;

in response to the carrier being configured with a PUCCH and the UE not having a real PUCCH transmission, reporting a power headroom of each TRP after reference PUCCH transmission in order;

in response to the carrier being configured with an SRS and the UE having a real SRS transmission, reporting a power headroom of each TRP after the real SRS transmission in order;

in response to the carrier being configured with an SRS and the UE having a real SRS transmission, reporting a power headroom of each TRP after reference SRS transmission in order;

in response to the carrier being configured with an SRS and the UE not having a real SRS transmission, reporting a power headroom of each TRP after reference SRS transmission in order;

in response to the carrier being configured with a PRACH and the UE having a real PRACH transmission, reporting a power headroom of each TRP after the real PRACH transmission in order;

in response to the carrier being configured with a PRACH and the UE having a real PRACH transmission, reporting a power headroom of each TRP after reference PRACH transmission in order;

in response to the carrier being configured with a PRACH and the UE not having a real PRACH transmission, reporting a power headroom of each TRP after reference PRACH transmission in order;

reporting a power back-off value of each TRP in order; or

a power back-off value of the UE.

In an embodiment of the present disclosure, the above-mentioned relevant second power parameter may include any one of the above. In another embodiment of the present disclosure, the above-mentioned relevant second power parameter may include any combination of the above.

It should be noted that, in an embodiment of the present disclosure, the UE may report the PHR of each TRP via a MAC-CE (media access control-control element) signaling.

The following describes the reporting format of the PHR MAC-CE when the reported content of the PHR of each TRP includes the relevant second power parameter.

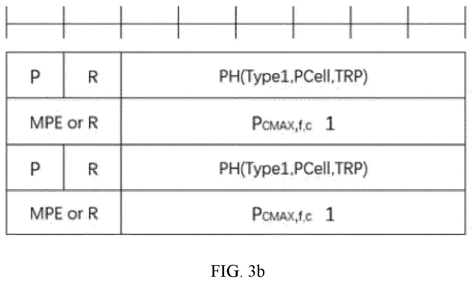

Fig. 3b is a schematic diagram of a reporting format of MAC-CE of each PHR in a case of single TRP transmission provided by an embodiment of the present disclosure. As shown in Figure 3b, the reporting format of the single TRP PHR MAC-CE includes fields "P", "PH", "MPE", and "$P_{CMAC,f,c}$".

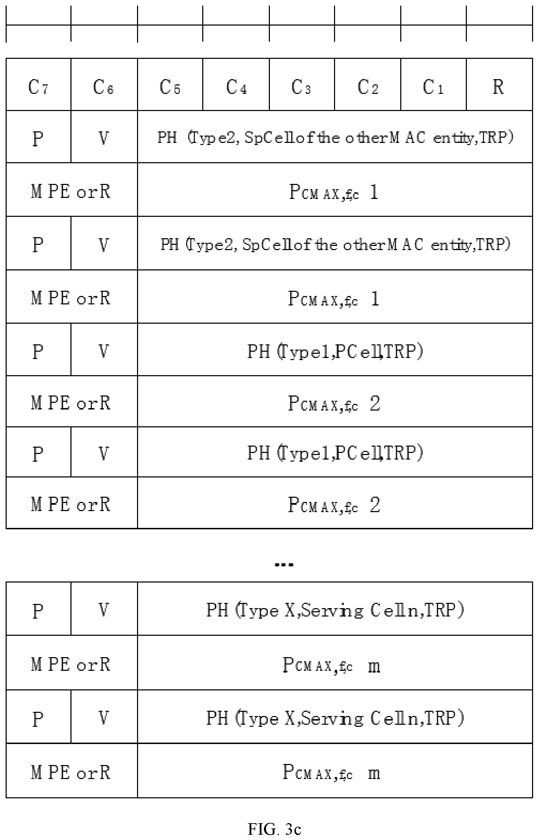

Fig. 3c is a schematic diagram of a reporting format of MAC-CE of each PHR in a case of multiple TRPs transmission and the number of cells less than or equal to 8 provided by an embodiment of the present disclosure. As shown in Fig. 3c, the reporting format of the multiple TRPs PHR MAC-CE includes fields "P", "PH", "MPE", "$P_{CMAC,f,ci}$", "V", and "$C_i$".

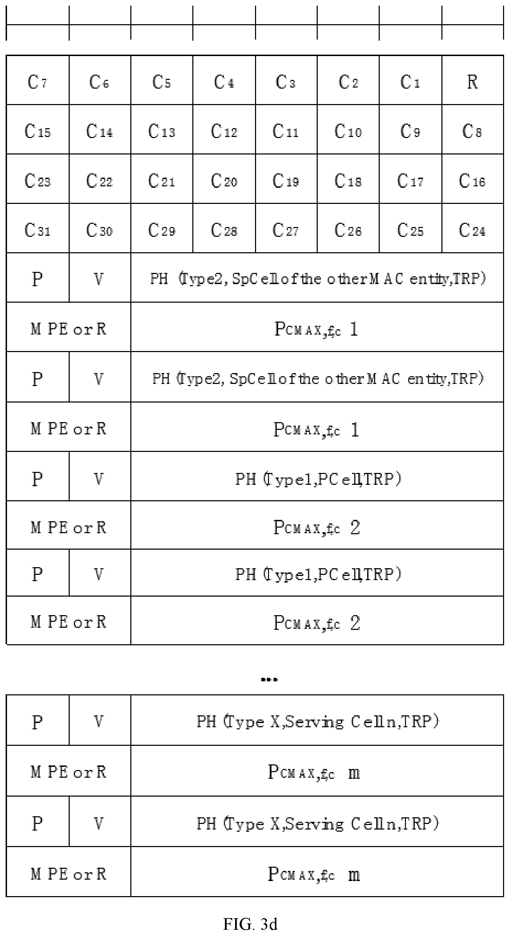

Fig. 3d is a schematic diagram of a reporting format of the MAC-CE of each PHR in a case of multiple TRP transmission and the number of cells greater than 8 provided by an embodiment of the present disclosure. As shown in Fig. 3d, the reporting format of the multiple TRPs PHR MAC-CE includes fields "P", "PH", "MPE", "$P_{CMAC,f,ci}$", "V", and "Ci".

The meanings of the above fields are as follows:

$C_i$: when one SCell is configured with SCellIndex through an RRC message, then this field indicates whether a PH field for the SCell configured with SCellIndex i is reported. The $C_i$ field set to "1" indicates that a PH field for the SCell configured with SCellIndex i is reported. The $C_i$ field set to "0" indicates that a PH field for the SCell configured with SCellIndex i is not reported.

R: Reserved bit, set to "0".

V: This field indicates whether the reported PH value is based on a real transmission or a reference format. For Type 1 PH, V=0 indicates real transmission on PUSCH, and V=1 indicates that a PUSCH reference format is used. For Type 2 PH, V=0 indicates real transmission on PUCCH, and V=1 indicates that a PUCCH reference format is used. For Type 3 PH, V=0 indicates real transmission on SRS, and V=1 indicates that an SRS reference format is used. Furthermore, for Type 1, Type 2 and Type 3 PH, V=0 indicates that the $P_{CMAX,c}$ field corresponding to a certain cell is included in the reporting format, and V=1 indicates that the $P_{CMAX,c}$ field corresponding to a certain cell is not included in the reporting format.

PH: This field indicates the power headroom level.

P: This field indicates whether the current MAC entity applies the power back-off mechanism. When there is no power back-off, if the $P_{CMAX,c}$ field corresponding to a certain cell has a different value, the MAC entity sets P=1.

MPE: this field indicates maximum permissible exposure.

And, types of PH include:

$$\text{Type 1 PH: } PH_{type1, c(i)} = P_{CMAX, c} - P_{PUSCH, c(i)}$$

$$\text{Type 2 PH: } PH_{type2, c(i)} = P_{CMAX,c} - P_{PUSCH,c(i)} - P_{PUCCH,c(i)}$$

$$\text{Type 3 PH: } PH_{type3, c(i)} = P_{CMAX, c} - P_{SRS, c(i)}$$

where "i" is a certain subframe "i",

And, $P_{PUSCH,c(i)}$: transmit power of an uplink data channel (PUSCH) obtained by the UE according to the calculation. When the UE has an actual signal transmission, this value is determined according to actual transmission channel power. When the UE does not have an actual signal transmission, this value is determined according to reference (or virtual) channel power.

$P_{PUCCH,c(i)}$: transmit power of an uplink control channel (PUCCH) obtained by the UE according to the calculation. When the UE has an actual signal transmission, this value is determined according to the actual transmission channel power. When the UE does not have an actual signal transmission, this value is determined according to reference (or virtual) channel power.

$P_{SRS,c(i)}$: transmit power of an uplink sounding reference channel (SRS) obtained by the UE according to the calculation. When the UE has an actual signal transmission, this value is determined according to the actual transmission channel power. When the UE does not have an actual signal transmission, this value is determined according to reference (or virtual) channel power.

$P_{CMAX,c}$: If this field exists, it indicates a value of $P_{CMAX,C}$ used to calculate a corresponding PH field value, that is, maximum transmit power of this cell calculated by the UE. To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

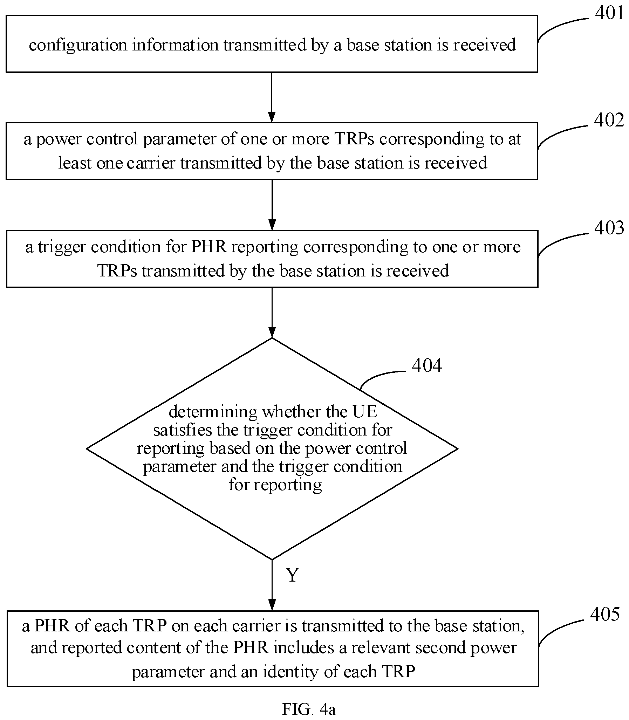

FIG. 4a is a schematic flowchart of a method for reporting a power headroom report provided by an embodiment of the present disclosure. The method is applied to a UE. As shown in FIG. 4a, the method for reporting a power headroom report may include the following steps.

Step 401, configuration information transmitted by a base station is received.

Step 402, a power control parameter of one or more TRPs corresponding to at least one carrier transmitted by the base station is received.

Step 403, a trigger condition for PHR reporting corresponding to one or more TRPs transmitted by the base station is received.

Step 404, it is determined whether the UE satisfies the trigger condition for reporting based on the power control parameter and the trigger condition for reporting, and if so, step 402 is performed.

In an embodiment of the present disclosure, when the UE satisfies the trigger condition for reporting, it means that the PHR needs to be reported to the base station at present, and step 402 may be continued.

For relevant descriptions about steps 401-404, reference may be made to the above-mentioned embodiments, and details are not repeated in the embodiment of the present disclosure.

Step 402, a PHR of each TRP on each carrier is transmitted to the base station, and reported content of the PHR includes a relevant second power parameter and an identity of each TRP.

In an embodiment of the present disclosure, the relevant second power parameter may include at least one of:

in response to the carrier being configured with power back-off, reporting maximum transmit power of each TRP on the carrier after the power back-off in order;

in response to the carrier being configured with a PUSCH and the UE having a real PUSCH transmission, reporting a power headroom of each TRP after the real PUSCH transmission in order;

in response to the carrier being configured with a PUSCH and the UE having a real PUSCH transmission, reporting a power headroom of each TRP after reference PUSCH transmission in order;

in response to the carrier being configured with a PUSCH and the UE not having a real PUSCH transmission, reporting a power headroom of each TRP after reference PUSCH transmission in order;

in response to the carrier being configured with a PUCCH and the UE having a real PUCCH transmission, reporting a power headroom of each TRP after the real PUCCH transmission in order;

in response to the carrier being configured with a PUCCH and the UE having a real PUCCH transmission, reporting a power headroom of each TRP after reference PUCCH transmission in order;

in response to the carrier being configured with a PUCCH and the UE not having a real PUCCH transmission, reporting a power headroom of each TRP after reference PUCCH transmission in order;

in response to the carrier being configured with an SRS and the UE having a real SRS transmission, reporting a power headroom of each TRP after the real SRS transmission in order;

in response to the carrier being configured with an SRS and the UE having a real SRS transmission, reporting a power headroom of each TRP after reference SRS transmission in order;

in response to the carrier being configured with an SRS and the UE not having a real SRS transmission, reporting a power headroom of each TRP after reference SRS transmission in order;

in response to the carrier being configured with a PRACH and the UE having a real PRACH transmission, reporting a power headroom of each TRP after the real PRACH transmission in order;

in response to the carrier being configured with a PRACH and the UE having a real PRACH transmission, reporting a power headroom of each TRP after reference PRACH transmission in order;

in response to the carrier being configured with a PRACH and the UE not having a real PRACH transmission, reporting a power headroom of each TRP after reference PRACH transmission in order;

reporting a power back-off value of each TRP in order; or

a power back-off value of the UE.

In an embodiment of the present disclosure, the above-mentioned relevant second power parameter may include any one of the above. In another embodiment of the present disclosure, the above-mentioned relevant second power parameter may include any combination of the above.

And, it should be noted that, in an embodiment of the present disclosure, the UE may report the PHR of each TRP via a MAC-CE signaling.

The following describes exemplarily the reporting format of the PHR MAC-CE when the reported content of the PHR of each TRP includes the relevant second power parameter and the identity of each TRP.

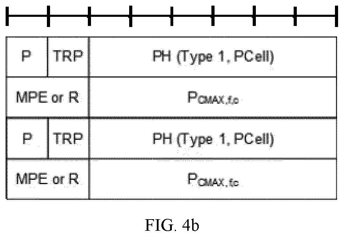

Fig. 4b is a schematic diagram of a reporting format of MAC-CE of each PHR in a case of single TRP transmission provided by an embodiment of the present disclosure. As shown in Figure 4b, the reporting format of the single TRP PHR MAC-CE includes fields "P", "PH", "MPE", "$P_{CMAC,f,c}$", and "TRP".

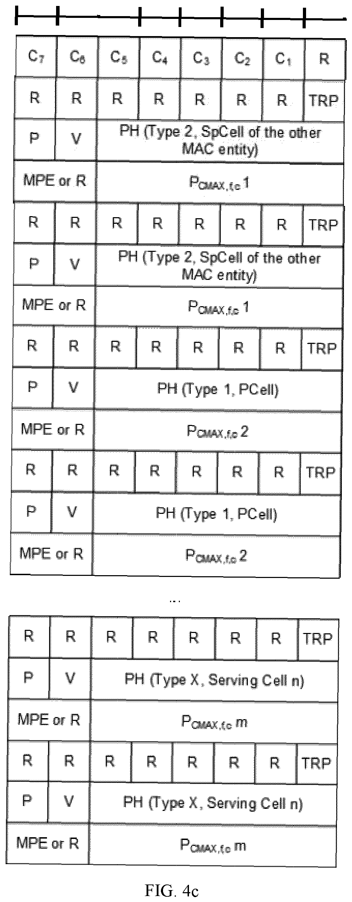

Fig. 4c is a schematic diagram of a reporting format of MAC-CE of each PHR in a case of multiple TRPs transmission and the number of cells less than or equal to 8 provided by an embodiment of the present disclosure. As shown in Fig. 4c, the reporting format of the multiple TRPs PHR MAC-CE includes fields "P", "PH", "MPE", "$P_{CMAC,f,ci}$", "V", "Ci", and "TRP".

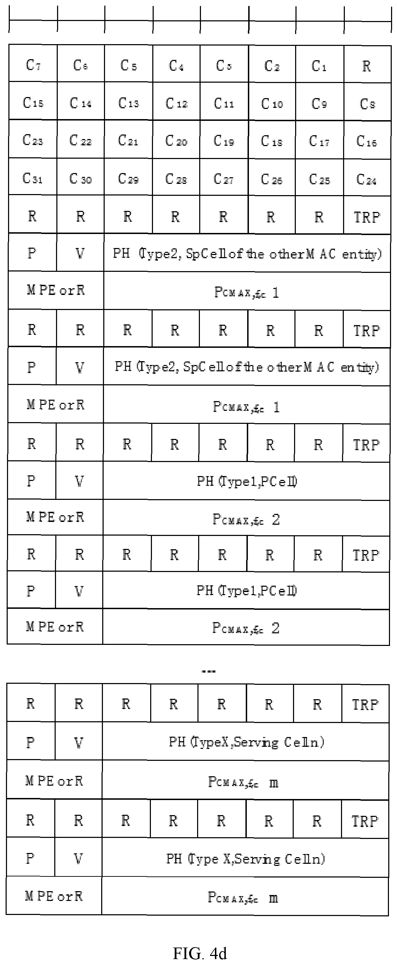

Fig. 4d is a schematic diagram of a reporting format of the MAC-CE of each PHR in a case of multiple TRP transmission and the number of cells greater than 8 provided by an embodiment of the present disclosure. As shown in Fig. 4d, the reporting format of the multiple TRPs PHR MAC-CE includes fields "P", "PH", "MPE", "$P_{CMAC,f,ci}$", "V", "Ci", and "TRP".

For the introduction of the relevant meanings of each field, reference may be made to the above-mentioned embodiments, and the details will not be repeated here in the embodiment of the present disclosure.

And, it should be noted that, in an embodiment of the present disclosure, in addition to the methods for TRP indication shown in Figs. 4b-4d, a method for unified TRP bitmap indication on each carrier can also be used to indicate the TRP identity, and then to respectively indicate the P, V, Pcmax, PH values corresponding to different TRPs in a predefined order.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data.

At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

In addition, it should be noted that, for the case where the UE supports the PHR reporting of one or more TRPs on one carrier, there may be a special case when the UE reports the PHRs of TRPs, that is, the UE triggers reporting of a single TRP corresponding to each carrier.

Specifically, in an embodiment of the present disclosure, based on the dynamic TRP scheduling indication information transmitted by the base station, the UE may determine whether to report to the base station the PHR of one TRP corresponding to each carrier, or to report to the base station the PHR of each TRP corresponding to each carrier.

Specifically, in an embodiment of the present disclosure, the dynamic TRP scheduling indication information is configured to indicate that the UE is currently in a single TRP transmission state or a multi-TRP transmission state. When the dynamic TRP scheduling indication information indicates that the UE is currently in a single TRP transmission state, the UE may report the PHR of one TRP corresponding to each carrier to the base station. When the dynamic TRP scheduling indication information indicates that the UE is currently in a multi-TRP transmission state, the UE may report the PHR of each TRP corresponding to each carrier to the base station.

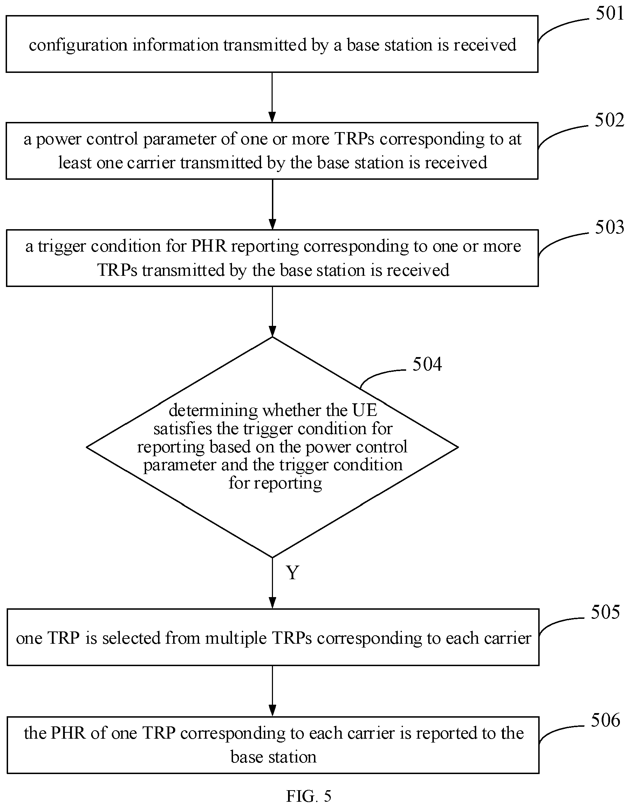

And, the following embodiments in FIG. 5-FIG. 7 are the introduction of the special case of "the UE triggers the reporting of a single TRP corresponding to each carrier".

FIG. 5 is a schematic flowchart of a method for reporting a power headroom report provided by an embodiment of the present disclosure. The method is applied to a UE. As shown in FIG. 5, the method for reporting a power headroom report may include the following steps.

Step 501, configuration information transmitted by a base station is received.

Step 505, a power control parameter of one or more TRPs corresponding to at least one carrier transmitted by the base station is received.

Step 506, a trigger condition for PHR reporting corresponding to one or more TRPs transmitted by the base station is received.

For relevant descriptions about steps 501-506, reference may be made to the above-mentioned embodiments, and details are not repeated in the embodiment of the present disclosure.

Step 507, it is determined whether the UE satisfies the trigger condition for reporting based on the power control parameter and the trigger condition for reporting, and if so, step 505 is performed.

In an embodiment of the present disclosure, when the UE satisfies the trigger condition for reporting, it means that the PHR needs to be reported to the base station at present, and step 505 may be continued.

Step 505, one TRP is selected from multiple TRPs corresponding to each carrier.

In an embodiment of the present disclosure, the method for selecting by the UE one TRP from multiple TRPs corresponding to the carrier may include at least one of:

Method 1: selecting one TRP from the carrier according to a predefined selection rule;
Method 2: selecting one TRP from the carrier according to a selection rule configured/indicated by a network; or
Method 3: autonomously selecting one TRP from the carrier.

In an embodiment of the present disclosure, the selection rules in method 1 and method 2 may include:

Rule 1: selecting a TRP corresponding to a predefined transmission opportunity on the carrier as the one TPR; or
Rule 2: defaulting a certain TRP on the carrier as the one TRP.

It should be noted that, in an embodiment of the present disclosure, the predefined transmission opportunity in rule 1 may be, for example, a first transmission opportunity on the carrier. And, in an embodiment of the present disclosure, defaulting a certain TRP on the carrier as the one TRP in rule 2 may be, for example, defaulting a TRP with the smallest or largest number corresponding to the carrier as the one TRP.

Further, in an embodiment of the present disclosure, the method 3 of autonomously selecting by the UE one TRP from the carrier may include: determining a TRP with the worst actual power control parameter in the carrier as a TRP to report the PHR.

Step 506, the PHR of one TRP corresponding to each carrier is reported to the base station.

In an embodiment of the present disclosure, the reported content of the PHR of one TRP reported by the UE to the base station may include the relevant first power parameter. The relevant first power parameter may include at least one of:

in response to the carrier being configured with power back-off, reporting maximum transmit power of one TRP on the carrier after the power back-off;

in response to the carrier being configured with a PUSCH and the UE having a real PUSCH transmission, reporting a power headroom of one TRP after the real PUSCH transmission;

in response to the carrier being configured with a PUSCH and the UE having a real PUSCH transmission, reporting a power headroom of one TRP after reference PUSCH transmission;

in response to the carrier being configured with a PUSCH and the UE not having a real PUSCH transmission, reporting a power headroom of one TRP after reference PUSCH transmission;

in response to the carrier being configured with a PUCCH and the UE having a real PUCCH transmission, reporting a power headroom of one TRP after the real PUCCH transmission;

in response to the carrier being configured with a PUCCH and the UE having a real PUCCH transmission, reporting a power headroom of one TRP after reference PUCCH transmission;

in response to the carrier being configured with a PUCCH and the UE not having a real PUCCH transmission, reporting a power headroom of one TRP after reference PUCCH transmission;

in response to the carrier being configured with an SRS and the UE having a real SRS transmission, reporting a power headroom of one TRP after the real SRS transmission;

in response to the carrier being configured with an SRS and the UE having a real SRS transmission, reporting a power headroom of one TRP after reference SRS transmission;

in response to the carrier being configured with an SRS and the UE not having a real SRS transmission, reporting a power headroom of one TRP after reference SRS transmission;

in response to the carrier being configured with a PRACH and the UE having a real PRACH transmission, reporting a power headroom of one TRP after the real PRACH transmission;

in response to the carrier being configured with a PRACH and the UE having a real PRACH transmission, reporting a power headroom of one TRP after reference PRACH transmission;

in response to the carrier being configured with a PRACH and the UE not having a real PRACH transmission, reporting a power headroom of one TRP after reference PRACH transmission;

reporting a power back-off value of the UE.

It should be noted that, in an embodiment of the present disclosure, the reported content may include any of the above. In another embodiment of the present disclosure, the reported content may include any combination of the above.

Further, taking PUSCH as an example (PUCCH/SRS/PRACH are similar) to introduce the above-mentioned "real PUSCH transmission" and "reference PUSCH transmission".

In an embodiment of the present disclosure, "the power headroom after the real PUSCH transmission" means: the power headroom of the PUSCH after performing real transmission on the PUSCH.

In an embodiment of the present disclosure, "the power headroom after reference PUSCH transmission" means: when there is no real transmission on the PUSCH, but the power headroom of the PUSCH needs to be reported, at this time, the UE may determine a reference PUSCH based on an instruction of a network, and use a transmission format and a transmission parameter corresponding to the reference PUSCH to calculate the power headroom of the PUSCH or other channels that need to report PHR, and use and report the calculated power headroom as the power headroom of the PUSCH that needs PHR reporting.

Further, it should be noted that, in an embodiment of the present disclosure, on the basis that the reported content of the PHR includes the above-mentioned relevant first power parameter, the UE may also optionally add an identity of the TRP to the reported content of the PHR.

That is, in an embodiment of the present disclosure, when the UE reports the PHR, the reported content may include: the relevant first power parameter. In another embodiment of the present disclosure, when the UE reports the PHR, the reported content may include: the relevant first power parameters + the identity of the TRP.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

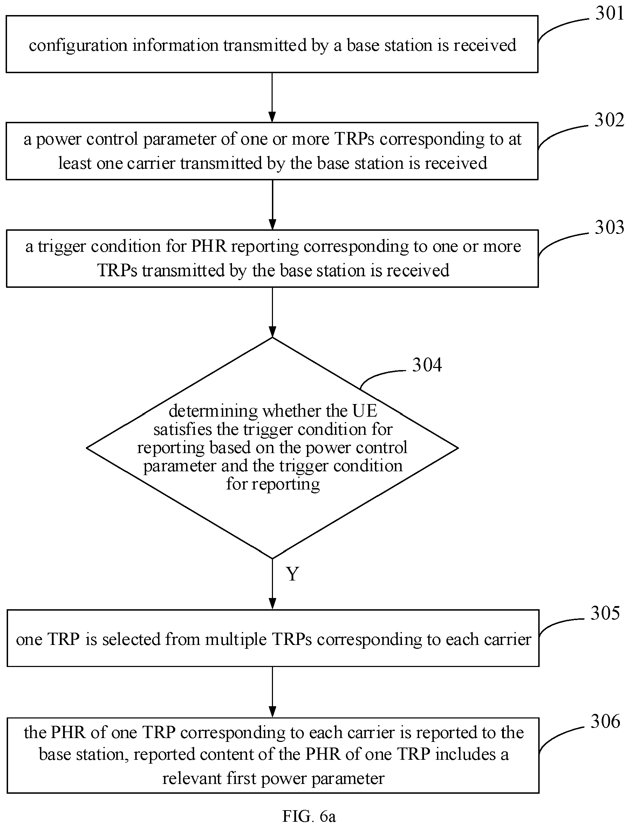

Fig. 6a is a schematic flowchart of a method for reporting a power headroom report provided by an embodiment of the present disclosure, which is applied to a UE. As shown in Fig. 6a, the method for reporting a power headroom report may include the following steps.

Step 601, configuration information transmitted by a base station is received.

Step 605, a power control parameter of one or more TRPs corresponding to at least one carrier transmitted by the base station is received.

Step 606, a trigger condition for PHR reporting corresponding to one or more TRPs transmitted by the base station is received.

Step 607, it is determined whether the UE satisfies the trigger condition for reporting based on the power control parameter and the trigger condition for reporting, and if so, step 605 is performed.

In an embodiment of the present disclosure, when the UE satisfies the trigger condition for reporting, it means that the PHR needs to be reported to the base station at present, and step 605 may be continued.

Step 605, one TRP is selected from multiple TRPs corresponding to each carrier.

For relevant descriptions about steps 601-605, reference may be made to the above-mentioned embodiments, and details are not repeated in the embodiment of the present disclosure.

Step 606, the PHR of one TRP corresponding to each carrier is reported to the base station, reported content of the PHR of one TRP includes a relevant first power parameter.

In an embodiment of the present disclosure, the relevant first power parameter may include at least one of:

in response to the carrier being configured with power back-off, reporting maximum transmit power of one TRP on the carrier after the power back-off;

in response to the carrier being configured with a PUSCH and the UE having a real PUSCH transmission, reporting a power headroom of one TRP after the real PUSCH transmission;

in response to the carrier being configured with a PUSCH and the UE having a real PUSCH transmission, reporting a power headroom of one TRP after reference PUSCH transmission;

in response to the carrier being configured with a PUSCH and the UE not having a real PUSCH transmission, reporting a power headroom of one TRP after reference PUSCH transmission;

in response to the carrier being configured with a PUCCH and the UE having a real PUCCH transmission, reporting a power headroom of one TRP after the real PUCCH transmission;

in response to the carrier being configured with a PUCCH and the UE having a real PUCCH transmission, reporting a power headroom of one TRP after reference PUCCH transmission;

in response to the carrier being configured with a PUCCH and the UE not having a real PUCCH transmission, reporting a power headroom of one TRP after reference PUCCH transmission;

in response to the carrier being configured with an SRS and the UE having a real SRS transmission, reporting a power headroom of one TRP after the real SRS transmission;

in response to the carrier being configured with an SRS and the UE having a real SRS transmission, reporting a power headroom of one TRP after reference SRS transmission;

in response to the carrier being configured with an SRS and the UE not having a real SRS transmission, reporting a power headroom of one TRP after reference SRS transmission;

in response to the carrier being configured with a PRACH and the UE having a real PRACH transmission, reporting a power headroom of one TRP after the real PRACH transmission;

in response to the carrier being configured with a PRACH and the UE having a real PRACH transmission, reporting a power headroom of one TRP after reference PRACH transmission;

in response to the carrier being configured with a PRACH and the UE not having a real PRACH transmission, reporting a power headroom of one TRP after reference PRACH transmission;

reporting a power back-off value of the UE.

It should be noted that, in an embodiment of the present disclosure, the reported content may include any of the above. In another embodiment of the present disclosure, the reported content may include any combination of the above.

And, it should be noted that, in an embodiment of the present disclosure, the UE may report the PHR of one TRP via a MAC-CE (media access control-control element) signaling.

The following describes exemplarily the reporting format of the PHR MAC-CE when the reported content of the PHR of one TRP includes the relevant first power parameter.

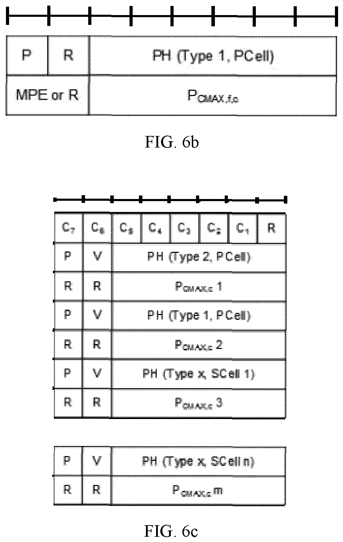

Fig. 6b is a schematic diagram of a reporting format of a PHR MAC-CE in a case of single TRP transmission provided by an embodiment of the present disclosure. As shown in Figure 6b, the reporting format of the single TRP PHR MAC-CE includes fields "P", "PH", "MPE", and "$P_{CMAC,f,c}$".

Fig. 6c is a schematic diagram of a reporting format of a PHR MAC-CE in a case of multiple TRPs transmission and the number of cells less than or equal to 8 provided by an embodiment of the present disclosure. As shown in Fig. 6c, the reporting format of the multiple TRPs PHR MAC-CE includes fields "P", "PH", "MPE", "$P_{CMAC,f,ci}$", "V", and "$C_i$".

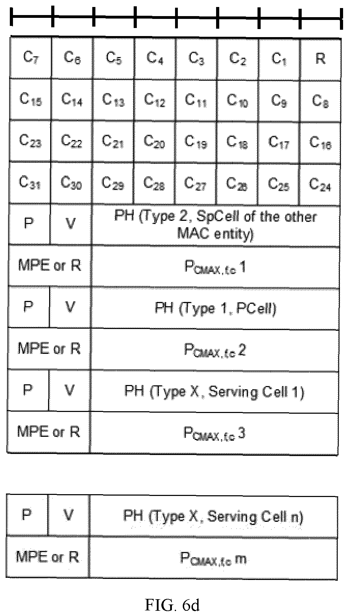

Fig. 6d is a schematic diagram of a reporting format of a PHR MAC-CE in a case of multiple TRPs transmission and the number of cells greater than 8 provided by an embodiment of the present disclosure. As shown in Fig. 6d, the reporting format of the multiple TRPs PHR MAC-CE includes fields "P", "PH", "MPE", and "$P_{CMAC,f,ci}$".

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources..

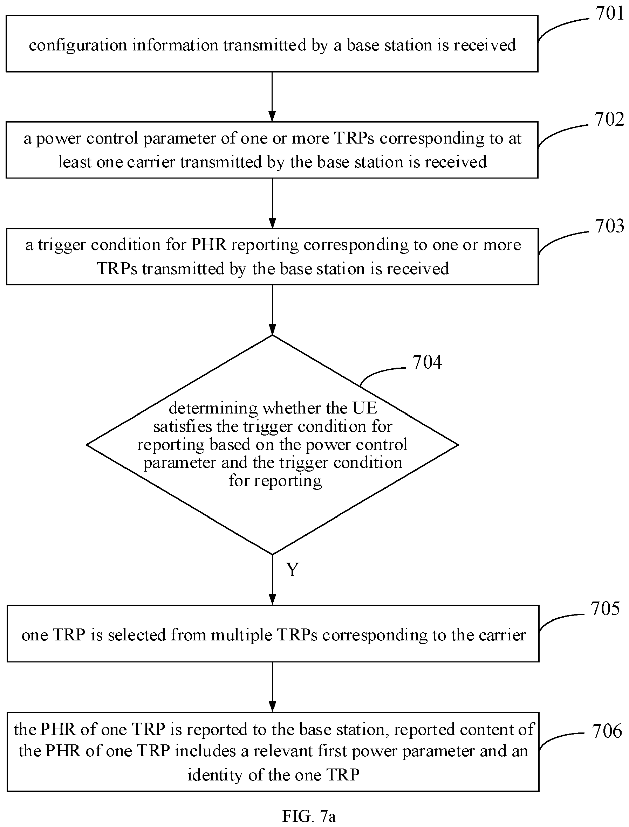

Fig. 7a is a schematic flowchart of a method for reporting a power headroom report provided by an embodiment of the present disclosure. The method is applied to a UE. As shown in Fig. 7a, the method for reporting a power headroom report may include the following steps.

Step 701, configuration information transmitted by a base station is received.

Step 705, a power control parameter of one or more TRPs corresponding to at least one carrier transmitted by the base station is received.

Step 706, a trigger condition for PHR reporting corresponding to one or more TRPs transmitted by the base station is received.

Step 707, it is determined whether the UE satisfies the trigger condition for reporting based on the power control parameter and the trigger condition for reporting, and if so, step 705 is performed.

In an embodiment of the present disclosure, when the UE satisfies the trigger condition for reporting, it means that the PHR needs to be reported to the base station at present, and step 705 may be continued.

Step 705, one TRP is selected from multiple TRPs corresponding to the carrier.

For relevant descriptions about steps 701-705, reference may be made to the above-mentioned embodiments, and details are not repeated in the embodiment of the present disclosure.

Step 706, the PHR of one TRP is reported to the base station, reported content of the PHR of one TRP includes a relevant first power parameter and an identity of the one TRP.

In an embodiment of the present disclosure, the relevant first power parameter may include at least one of the following:

In an embodiment of the present disclosure, the relevant first power parameter may include at least one of:

> in response to the carrier being configured with power back-off, reporting maximum transmit power of one TRP on the carrier after the power back-off;
> in response to the carrier being configured with a PUSCH and the UE having a real PUSCH transmission, reporting a power headroom of one TRP after the real PUSCH transmission;
> in response to the carrier being configured with a PUSCH and the UE having a real PUSCH transmission, reporting a power headroom of one TRP after reference PUSCH transmission;
> in response to the carrier being configured with a PUSCH and the UE not having a real PUSCH transmission, reporting a power headroom of one TRP after reference PUSCH transmission;
> in response to the carrier being configured with a PUCCH and the UE having a real PUCCH transmission, reporting a power headroom of one TRP after the real PUCCH transmission;

in response to the carrier being configured with a PUCCH and the UE having a real PUCCH transmission, reporting a power headroom of one TRP after reference PUCCH transmission;

in response to the carrier being configured with a PUCCH and the UE not having a real PUCCH transmission, reporting a power headroom of one TRP after reference PUCCH transmission;

in response to the carrier being configured with an SRS and the UE having a real SRS transmission, reporting a power headroom of one TRP after the real SRS transmission;

in response to the carrier being configured with an SRS and the UE having a real SRS transmission, reporting a power headroom of one TRP after reference SRS transmission;

in response to the carrier being configured with an SRS and the UE not having a real SRS transmission, reporting a power headroom of one TRP after reference SRS transmission;

in response to the carrier being configured with a PRACH and the UE having a real PRACH transmission, reporting a power headroom of one TRP after the real PRACH transmission;

in response to the carrier being configured with a PRACH and the UE having a real PRACH transmission, reporting a power headroom of one TRP after reference PRACH transmission;

in response to the carrier being configured with a PRACH and the UE not having a real PRACH transmission, reporting a power headroom of one TRP after reference PRACH transmission;

reporting a power back-off value of the UE.

It should be noted that, in an embodiment of the present disclosure, the reported content may include any of the above. In another embodiment of the present disclosure, the reported content may include any combination of the above.

And, it should be noted that, in an embodiment of the present disclosure, the UE may report the PHR of each TRP via a MAC-CE signaling.

The following describes exemplarily the reporting format of the PHR MAC-CE when the reported content of the PHR of one TRP includes the relevant first power parameter and the identity of the one TRP.

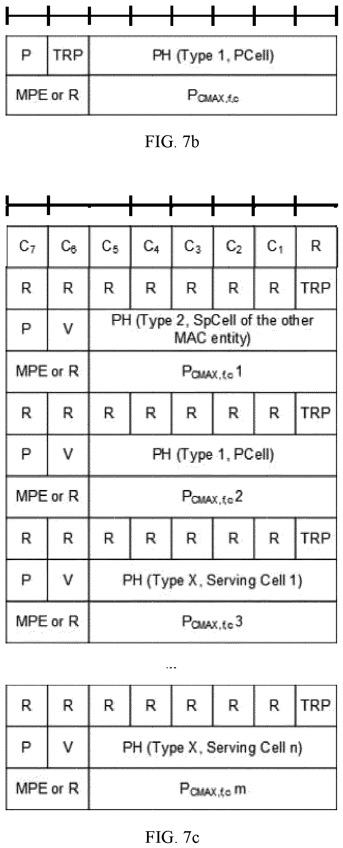

Fig. 7b is a schematic diagram of a reporting format of a PHR MAC-CE in a case of single TRP transmission provided by an embodiment of the present disclosure. As shown in Figure 7b, the reporting format of the single TRP PHR MAC-CE includes fields "P", "PH", "MPE", "$P_{CMAC,f,c}$", and "TRP".

Fig. 7c is a schematic diagram of a reporting format of a PHR MAC-CE in a case of multiple TRPs transmission and the number of cells less than or equal to 8 provided by an embodiment of the present disclosure. As shown in Fig. 4c, the reporting format of the single TRP PHR MAC-CE includes fields "P", "PH", "MPE", "$P_{CMAC,f,ci}$", "V", "Ci", and "TRP".

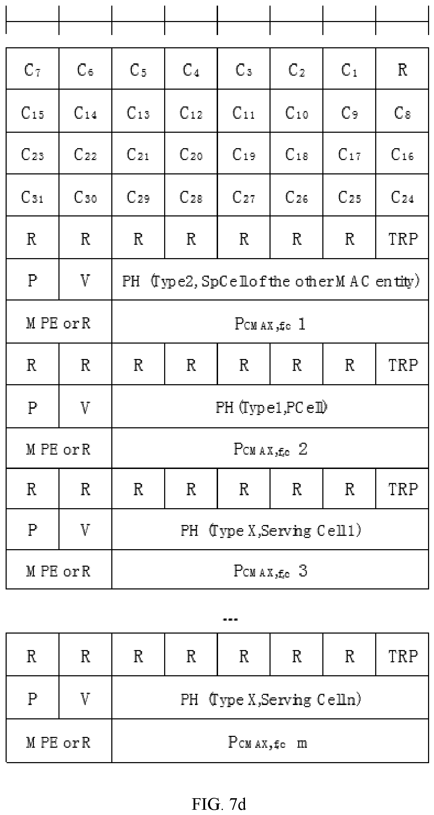

Fig. 7d is a schematic diagram of a reporting format of a PHR MAC-CE in a case of multiple TRP transmission and the number of cells greater than 8 provided by an embodiment of the present disclosure. As shown in Fig. 7d, the reporting format of the single TRP PHR MAC-CE includes fields "P", "PH", "MPE", "$P_{CMAC,f,ci}$", "V", "Ci", and "TRP".

The filed "TRP" means: indicating an identity of one TRP reporting PHR on each carrier.

For the introduction of the relevant meanings of each field, reference may be made to the above-mentioned embodiments, and the details will not be repeated here in the embodiment of the present disclosure.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

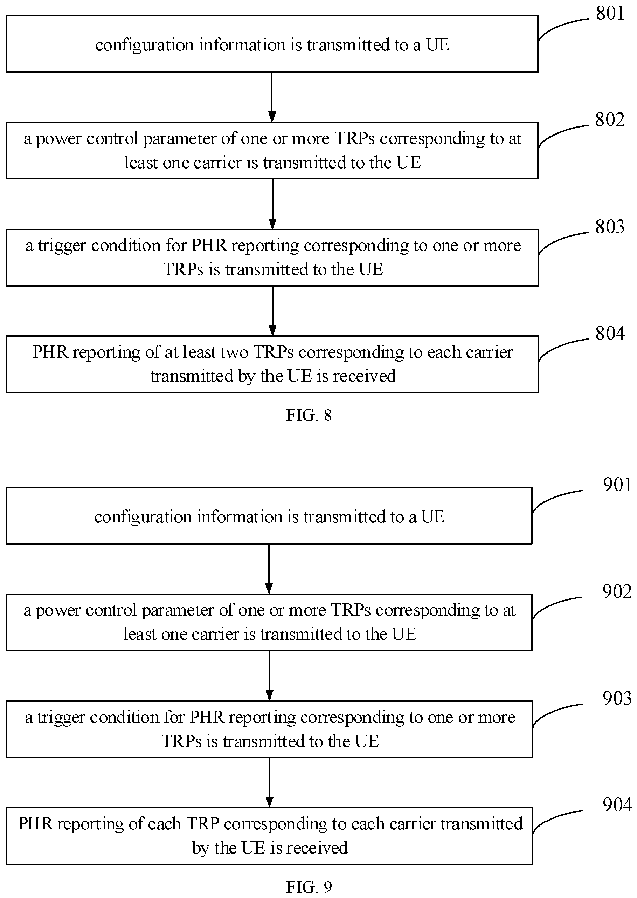

FIG. 8 is a schematic flowchart of a method for reporting a power headroom report provided by an embodiment of the present disclosure. The method is applied to a base station. As shown in FIG. 8, the method for reporting a power headroom report may include the following steps.

Step 801, configuration information is transmitted to a UE.

In an embodiment of the present disclosure, the method of the embodiment of the present disclosure may be adapted to a multi-TRP scenario.

In an embodiment of the present disclosure, the above configuration information may be configured to instruct the UE to support PHR reporting of one or more TRPs on one carrier.

It can be known that, the method in the embodiment of the present disclosure is specifically applied to a UE that supports reporting of one or more TRPs on one carrier in a multi-TRP scenario.

Step 802, a power control parameter of one or more TRPs corresponding to at least one carrier is transmitted to the UE.

In an embodiment of the present disclosure, each TRP may correspond to a power control parameter, and different TRPs may correspond to different power control parameters.

In an embodiment of the present disclosure, in the multi-TRP scenario, the process of the base station transmitting the power control parameter of the one or more TRPs to the UE through the one or more TRPs is relatively independent, and the independence of the TRPs enables better scheduling of resources in the multi-TRP scenario.

Further, in an embodiment of the present disclosure, the power control parameter may include at least one of:

first information corresponding to a TRP on the carrier; or
second information corresponding to the carrier.

Specifically, in an embodiment of the present disclosure, the above first information corresponding to the TRP on the carrier may include at least one of:

identity information corresponding to the TRP on the carrier;
identity information of a downlink path loss reference carrier corresponding to the TRP on the carrier;
a downlink path loss change corresponding to the TRP on the carrier;
an uplink power back-off change corresponding to the TRP on the carrier;
a PHR periodic reporting timer corresponding to the TRP on the carrier;
a PHR reporting prohibition timer corresponding to the TRP on the carrier;
an MPE (maximum permissible exposure) power threshold corresponding to the TRP on the carrier;
an MPE reporting prohibition timer corresponding to the TRP on the carrier;
an uplink MPE power back-off change corresponding to the TRP on the carrier; or
MPE FR2 reporting corresponding to the TRP on the carrier.

It should be noted that, in an embodiment of the present disclosure, the first information corresponding to the TRP on the carrier may include any one of the above. In another embodiment of the present disclosure, the first information corresponding to the TRP on the carrier may include any combination of the above.

It should be noted that, in an embodiment of the present disclosure, the identity information corresponding to the TRP on the carrier in the first information may include at least one of:

an uplink physical channel identity of the TRP on the carrier;
a beam information identity of the TRP on the carrier;
an SRS (sounding reference signal) resource set identity of the TRP on the carrier;
a power control parameter set identity of the TRP on the carrier.

Further, in an embodiment of the present disclosure, the above uplink physical channel may include at least one of:

a PUCCH;
a PUSCH;
an SRS; or
a PRACH.

Further, in an embodiment of the present disclosure, the above-mentioned second information corresponding to the carrier may include at least one of:

identity information of a downlink path loss reference carrier corresponding to the carrier;
a downlink path loss change corresponding to the carrier;
an uplink power back-off change corresponding to the carrier;
a PHR periodic reporting timer corresponding to the carrier;

a PHR reporting prohibition timer corresponding to the carrier;
an MPE power threshold corresponding to the carrier;
an MPE reporting prohibition timer corresponding to the carrier;
an uplink MPE power back-off change corresponding to the carrier; or
MPE FR2 reporting corresponding to the carrier.

It should be noted that, in an embodiment of the present disclosure, the second information corresponding to the carrier may include any one of the above. In another embodiment of the present disclosure, the second information corresponding to the carrier may include any combination of the above.

Step 803, a trigger condition for PHR reporting corresponding to one or more TRPs is transmitted to the UE.

In an embodiment of the present disclosure, the trigger condition for reporting may include at least one of:

changing identity information corresponding to a TRP on the carrier;
changing a downlink path loss reference carrier corresponding to a TRP on the carrier;
changing a carrier for uplink physical channel transmission of a TRP on the carrier;
a timeout of a PHR periodic reporting timer corresponding to a TRP on the carrier;
a timeout of a PHR reporting prohibition timer corresponding to a TRP on the carrier, and an actual downlink path loss change corresponding to the TRP exceeding a downlink path loss change corresponding to the TRP on the carrier in the power control parameter;
a timeout of a PHR reporting prohibition timer corresponding to a TRP on the carrier, and an actual uplink power back-off change corresponding to the TRP exceeding an uplink power back-off change of the TRP on the carrier in the power control parameter;
a timeout of a PHR reporting prohibition timer corresponding to a TRP on the carrier, and an actual downlink path loss change corresponding to the TRP exceeding a downlink path loss change corresponding to the carrier in the power control parameter;
a timeout of a PHR reporting prohibition timer corresponding to a TRP on the carrier, and an actual uplink power back-off change corresponding to the TRP exceeding an uplink power back-off change corresponding to the carrier in the power control parameter;
a timeout of a PHR periodic reporting timer corresponding to the carrier;
a timeout of a PHR reporting prohibition timer corresponding to the carrier, and an actual downlink path loss change corresponding to the TRP exceeding a downlink path loss change corresponding to a TRP on the carrier in the power control parameter;
a timeout of a PHR reporting prohibition timer corresponding to the carrier, and an actual uplink power back-off change corresponding to the TRP exceeding an uplink power back-off change corresponding to a TRP on the carrier in the power control parameter;
a timeout of a PHR reporting prohibition timer corresponding to the carrier, and an actual downlink path loss change corresponding to the TRP exceeding a downlink path loss change corresponding to the carrier in the power control parameter;
a timeout of a PHR reporting prohibition timer corresponding to the carrier, and an actual uplink power back-off change corresponding to the TRP exceeding an uplink power back-off change corresponding to the carrier in the power control parameter;
changing a downlink path loss reference carrier corresponding to the carrier;
configuring MPE FR2 reporting corresponding to the TRP on the carrier, and an MPE power back-off change corresponding to the TRP exceeding an MPE power threshold corresponding to the TRP on the carrier in the power control parameter;
configuring MPE FR2 reporting corresponding to the TRP on the carrier, and an MPE power back-off change corresponding to the TRP exceeding an uplink MPE power back-off change corresponding to the TRP on the carrier in the power control parameter;
configuring MPE FR2 reporting corresponding to the TRP on the carrier, and an MPE power back-off change corresponding to the TRP exceeding an MPE power threshold corresponding to the carrier in the power control parameter;
configuring MPE FR2 reporting corresponding to the TRP on the carrier, and an MPE power back-off change corresponding to the TRP exceeding an uplink MPE power back-off change corresponding to the carrier in the power control parameter;
configuring MPE FR2 reporting corresponding to the carrier, and an MPE power back-off change corresponding to the TRP exceeding an MPE power threshold corresponding to the TRP on the carrier in the power control parameter;
configuring MPE FR2 reporting corresponding to the carrier, and an MPE power back-off change corresponding to the TRP exceeding an uplink MPE power back-off change corresponding to the TRP on the carrier in the power control parameter;

configuring MPE FR2 reporting corresponding to the carrier, and an MPE power back-off change corresponding to the TRP exceeding an MPE power threshold corresponding to the carrier in the power control parameter;

configuring MPE FR2 reporting corresponding to the carrier, and an MPE power back-off change corresponding to the TRP exceeding an uplink MPE power back-off change corresponding to the carrier in the power control parameter;

a timeout of an MPE reporting prohibition timer corresponding to the TRP on the carrier; or

a timeout of an MPE reporting prohibition timer corresponding to the carrier.

It should be noted that, in an embodiment of the present disclosure, the trigger condition for reporting may include any one of the above. In another embodiment of the present disclosure, the trigger condition for reporting may include any combination of the above.

Step 804, PHR reporting of at least two TRPs corresponding to each carrier transmitted by the UE is received.

In an embodiment of the present disclosure, the UE may report a PHR of each TRP corresponding to each carrier to the base station.

And, the specific method for reporting by the UE the PHR of each TRP in each carrier to the base station will be introduced in subsequent embodiments.

In addition, it should be noted that in an embodiment of the present disclosure, in addition to reporting the PHR of each TRP of each carrier to the base station, the UE may also report PHRs of multiple TRPs corresponding to each carrier to the base station. The number of TRPs reported is less than the number of TRPs in the corresponding carrier, and the TRPs reporting the PHRs may specifically be TRPs with relevant information being changed. The relevant information may include at least one of identity information corresponding to the TRP, a downlink path loss reference carrier corresponding to the TRP, or a carrier for uplink physical channel transmission corresponding to the TRP.

For example, assuming that a certain carrier includes TRP-1, TRP-2, and TRP-3. When downlink path loss reference carriers of TRP-1 and TRP-2 are changed, PHRs of TRP-1 and TRP-2 may be reported to the base station.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

FIG. 9 is a schematic flowchart of a method for reporting a power headroom report provided by an embodiment of the present disclosure. The method is applied to a base station. As shown in FIG. 9, the method for reporting a power headroom report may include the following steps.

Step 901, configuration information is transmitted to a UE.

Step 902, a power control parameter of one or more TRPs corresponding to at least one carrier is transmitted to the UE.

Step 903, a trigger condition for PHR reporting corresponding to one or more TRPs is transmitted to the UE.

For relevant description on steps 901-903, reference can be made to the above-mentioned embodiments, and details are not repeated here in the embodiment of the present disclosure.

Step 904, PHR reporting of each TRP corresponding to each carrier transmitted by the UE is received.

In an embodiment of the present disclosure, reported content of the PHR of each TRP reported by the UE to the base station may include the relevant second power parameter. In an embodiment of the present disclosure, the relevant second power parameter may include at least one of:

in response to the carrier being configured with power back-off, reporting maximum transmit power of each TRP on the carrier after the power back-off in order;

in response to the carrier being configured with a PUSCH and the UE having a real PUSCH transmission, reporting a power headroom of each TRP after the real PUSCH transmission in order;

in response to the carrier being configured with a PUSCH and the UE having a real PUSCH transmission, reporting a power headroom of each TRP after reference PUSCH transmission in order;

in response to the carrier being configured with a PUSCH and the UE not having a real PUSCH transmission, reporting a power headroom of each TRP after reference PUSCH transmission in order;

in response to the carrier being configured with a PUCCH and the UE having a real PUCCH transmission, reporting a power headroom of each TRP after the real PUCCH transmission in order;

in response to the carrier being configured with a PUCCH and the UE having a real PUCCH transmission, reporting a power headroom of each TRP after reference PUCCH transmission in order;

in response to the carrier being configured with a PUCCH and the UE not having a real PUCCH transmission, reporting a power headroom of each TRP after reference PUCCH transmission in order;

in response to the carrier being configured with an SRS and the UE having a real SRS transmission, reporting a power headroom of each TRP after the real SRS transmission in order;

in response to the carrier being configured with an SRS and the UE having a real SRS transmission, reporting a power headroom of each TRP after reference SRS transmission in order;

in response to the carrier being configured with an SRS and the UE not having a real SRS transmission, reporting a power headroom of each TRP after reference SRS transmission in order;

in response to the carrier being configured with a PRACH and the UE having a real PRACH transmission, reporting a power headroom of each TRP after the real PRACH transmission in order;

in response to the carrier being configured with a PRACH and the UE having a real PRACH transmission, reporting a power headroom of each TRP after reference PRACH transmission in order;

in response to the carrier being configured with a PRACH and the UE not having a real PRACH transmission, reporting a power headroom of each TRP after reference PRACH transmission in order;

reporting a power back-off value of each TRP in order; or

a power back-off value of the UE.

In an embodiment of the present disclosure, the above-mentioned relevant second power parameter may include any one of the above. In another embodiment of the present disclosure, the above-mentioned relevant second power parameter may include any combination of the above.

Taking PUSCH as an example (PUCCH/SRS/PRACH are similar) to introduce the above-mentioned "real PUSCH transmission" and "reference PUSCH transmission".

In an embodiment of the present disclosure, "the power headroom after the real PUSCH transmission" means: the power headroom of the PUSCH after performing real transmission on the PUSCH.

In an embodiment of the present disclosure, "the power headroom after reference PUSCH transmission" means: when there is no real transmission on the PUSCH, but the power headroom of the PUSCH needs to be reported, at this time, the UE may determine a reference PUSCH based on an instruction of a network, and use a transmission format and a transmission parameter corresponding to the reference PUSCH to calculate the power headroom of the PUSCH or other channels that need to report PHR, and use and report the calculated power headroom as the power headroom of the PUSCH that needs PHR reporting.

Further, it should be noted that, in an embodiment of the present disclosure, on the basis that the reported content of the PHR includes the above-mentioned relevant second power parameter, the UE may also optionally add an identity of each TRP to the reported content of the PHR.

That is, in an embodiment of the present disclosure, when the UE reports the PHR, the reported content may include: the relevant second power parameter. In another embodiment of the present disclosure, when the UE reports the PHR, the reported content may include: the relevant second power parameters + an identity of each TRP.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

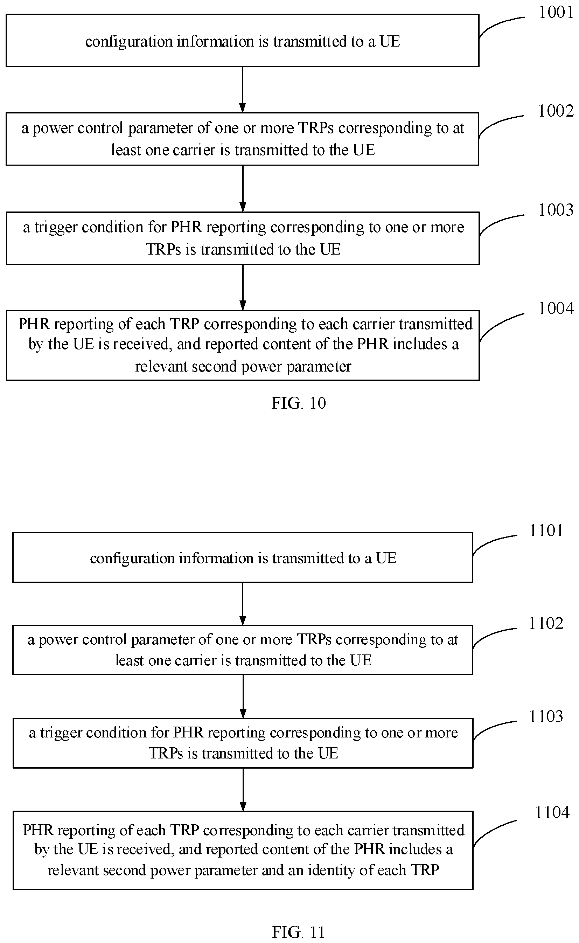

FIG. 10 is a schematic flowchart of a method for reporting a power headroom report provided by an embodiment of the present disclosure. The method is applied to a base station. As shown in FIG. 10, the method for reporting a power headroom report may include the following steps.

Step 1001, configuration information is transmitted to a UE.

Step 1002, a power control parameter of one or more TRPs corresponding to at least one carrier is transmitted to the UE.

Step 1003, a trigger condition for PHR reporting corresponding to one or more TRPs is transmitted to the UE.

Step 1004, PHR reporting of each TRP corresponding to each carrier transmitted by the UE is received, and reported content of the PHR includes a relevant second power parameter.

For relevant description on steps 1001-1004, reference can be made to the above-mentioned embodiments, and details are not repeated here in the embodiment of the present disclosure.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

FIG. 11 is a schematic flowchart of a method for reporting a power headroom report provided by an embodiment of the present disclosure. The method is applied to a base station. As shown in FIG. 11, the method for reporting a power headroom report may include the following steps.

Step 1101, configuration information is transmitted to a UE.

Step 1102, a power control parameter of one or more TRPs corresponding to at least one carrier is transmitted to the UE.

Step 1103, a trigger condition for PHR reporting corresponding to one or more TRPs is transmitted to the UE.

Step 1104, PHR reporting of each TRP corresponding to each carrier transmitted by the UE is received, and reported content of the PHR of each TRP includes a relevant second power parameter and an identity of each TRP.

For relevant description on steps 1101-1104, reference can be made to the above-mentioned embodiments, and details are not repeated here in the embodiment of the present disclosure.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

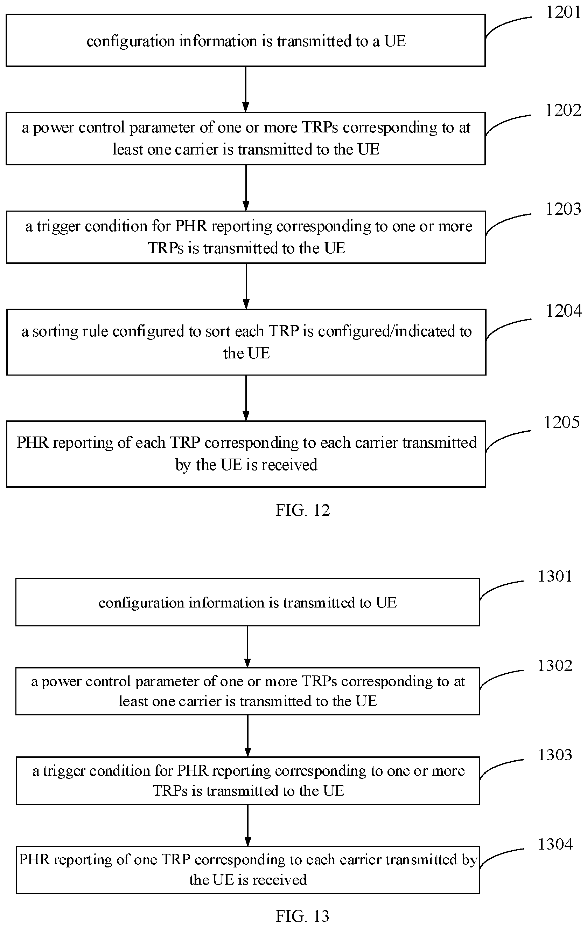

FIG. 12 is a schematic flowchart of a method for reporting a power headroom report provided by an embodiment of the present disclosure. The method is applied to a base station. As shown in FIG. 12 , the method for reporting a power headroom report may include the following steps.

Step 1201, configuration information is transmitted to a UE.

Step 1202, a power control parameter of one or more TRPs corresponding to at least one carrier is transmitted to the UE.

Step 1203, a trigger condition for PHR reporting corresponding to one or more TRPs is transmitted to the UE.

Step 1204, a sorting rule configured to sort each TRP is configured/indicated to the UE.

Step 1205, PHR reporting of each TRP corresponding to each carrier transmitted by the UE is received.

For relevant descriptions about steps 1201-1206, reference may be made to the descriptions of the foregoing embodiments, and details are not repeated here in the embodiment of the present disclosure.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

In addition, it should be noted that, for the case where the UE supports the PHR reporting of one or more TRPs on one carrier, there may be a special case when the UE reports the PHRs of TRPs, that is, the UE triggers reporting of a single TRP corresponding to each carrier.

Specifically, in an embodiment of the present disclosure, based on the dynamic TRP scheduling indication information transmitted by the base station, the UE may determine whether to report to the base station the PHR of one TRP corresponding to each carrier, or to report to the base station the PHR of each TRP corresponding to each carrier.

Specifically, in an embodiment of the present disclosure, the dynamic TRP scheduling indication information is configured to indicate that the UE is currently in a single TRP transmission state or a multi-TRP transmission state. When the dynamic TRP scheduling indication information indicates that the UE is currently in a single TRP transmission state, the UE may report the PHR of one TRP corresponding to each carrier to the base station. When the dynamic TRP scheduling indication information indicates that the UE is currently in a multi-TRP transmission state, the UE may report the PHR of each TRP corresponding to each carrier to the base station.

And, the following embodiments in FIG. 13-FIG. 16 are the introduction of the special case of "the UE triggers the reporting of a single TRP corresponding to each carrier".

FIG. 13 is a schematic flowchart of a method for reporting a power headroom report provided by an embodiment of the present disclosure. The method is applied to a base station. As shown in FIG. 13, the method for reporting a power headroom report may include the following steps.

Step 1301, configuration information is transmitted to UE.

Step 1302, a power control parameter of one or more TRPs corresponding to at least one carrier is transmitted to the UE.

Step 1303, a trigger condition for PHR reporting corresponding to one or more TRPs is transmitted to the UE.

For related introductions about steps 1301-1303, reference may be made to the above-mentioned embodiments, and details are not repeated here in the embodiment of the present disclosure.

Step 1304, PHR reporting of one TRP corresponding to each carrier transmitted by the UE is received.

In an embodiment of the present disclosure, the reported content of the PHR of one TRP reported by the UE to the base station may include a relevant first power parameter.

The relevant first power parameter may include at least one of:

in response to the carrier being configured with power back-off, reporting maximum transmit power of one TRP on the carrier after the power back-off;

in response to the carrier being configured with a PUSCH and the UE having a real PUSCH transmission, reporting a power headroom of one TRP after the real PUSCH transmission;

in response to the carrier being configured with a PUSCH and the UE having a real PUSCH transmission, reporting a power headroom of one TRP after reference PUSCH transmission;

in response to the carrier being configured with a PUSCH and the UE not having a real PUSCH transmission, reporting a power headroom of one TRP after reference PUSCH transmission;

in response to the carrier being configured with a PUCCH and the UE having a real PUCCH transmission, reporting a power headroom of one TRP after the real PUCCH transmission;

in response to the carrier being configured with a PUCCH and the UE having a real PUCCH transmission, reporting a power headroom of one TRP after reference PUCCH transmission;

in response to the carrier being configured with a PUCCH and the UE not having a real PUCCH transmission, reporting a power headroom of one TRP after reference PUCCH transmission;

in response to the carrier being configured with an SRS and the UE having a real SRS transmission, reporting a power headroom of one TRP after the real SRS transmission;

in response to the carrier being configured with an SRS and the UE having a real SRS transmission, reporting a power headroom of one TRP after reference SRS transmission;

in response to the carrier being configured with an SRS and the UE not having a real SRS transmission, reporting a power headroom of one TRP after reference SRS transmission;

in response to the carrier being configured with a PRACH and the UE having a real PRACH transmission, reporting a power headroom of one TRP after the real PRACH transmission;

in response to the carrier being configured with a PRACH and the UE having a real PRACH transmission, reporting a power headroom of one TRP after reference PRACH transmission;

in response to the carrier being configured with a PRACH and the UE not having a real PRACH transmission, reporting a power headroom of one TRP after reference PRACH transmission;

reporting a power back-off value of the UE.

It should be noted that, in an embodiment of the present disclosure, the reported content may include any of the above. In another embodiment of the present disclosure, the reported content may include any combination of the above.

Further, taking PUSCH as an example (PUCCH/SRS/PRACH are similar) to introduce the above-mentioned "real PUSCH transmission" and "reference PUSCH transmission".

In an embodiment of the present disclosure, "the power headroom after the real PUSCH transmission" means: the power headroom of the PUSCH after performing real transmission on the PUSCH.

In an embodiment of the present disclosure, "the power headroom after reference PUSCH transmission" means: when there is no real transmission on the PUSCH, but the power headroom of the PUSCH needs to be reported, at this time, the UE may determine a reference PUSCH based on an instruction of a network, and use a transmission format and a transmission parameter corresponding to the reference PUSCH to calculate the power headroom of the PUSCH or other channels that need to report PHR, and use and report the calculated power headroom as the power headroom of the PUSCH that needs PHR reporting.

Further, it should be noted that, in an embodiment of the present disclosure, on the basis that the reported content of the PHR includes the above-mentioned relevant first power parameter, the UE may also optionally add an identity of the TRP to the reported content of the PHR.

That is, in an embodiment of the present disclosure, when the UE reports the PHR, the reported content may include: the relevant first power parameter. In another embodiment of the present disclosure, when the UE reports the PHR, the reported content may include: the relevant first power parameters + the identity of the TRP.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

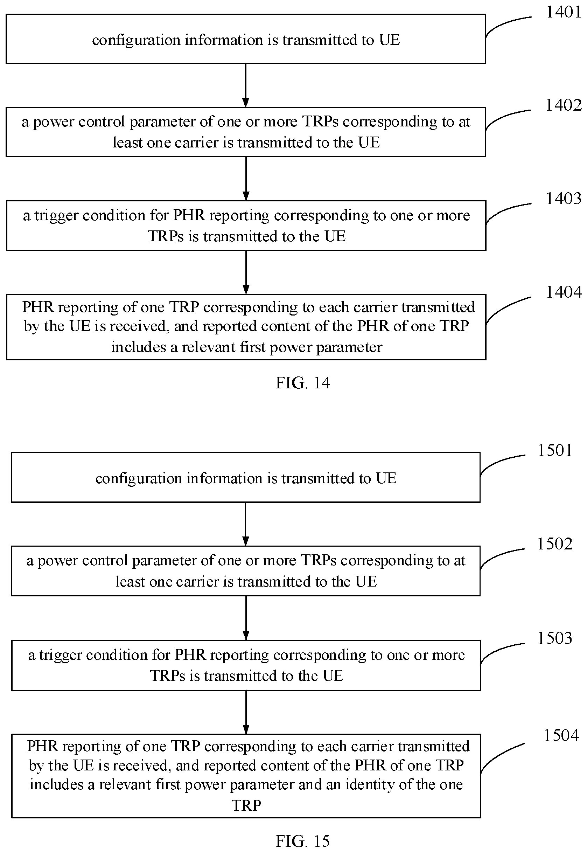

FIG. 14 is a schematic flowchart of a method for reporting a power headroom report provided by an embodiment of the present disclosure. The method is applied to a base station. As shown in FIG. 14 , the method for reporting a power headroom report may include the following steps:

Step 1401, configuration information is transmitted to UE.

Step 1402, a power control parameter of one or more TRPs corresponding to at least one carrier is transmitted to the UE.

Step 1403, a trigger condition for PHR reporting corresponding to one or more TRPs is transmitted to the UE.

Step 1404, PHR reporting of one TRP corresponding to each carrier transmitted by the UE is received, and reported content of the PHR of one TRP includes a relevant first power parameter.

For relevant introductions about steps 1401-1404, reference may be made to the descriptions of the foregoing embodiments, and details are not repeated in the embodiment of the present disclosure.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

FIG. 15 is a schematic flowchart of a method for reporting a power headroom report provided by an embodiment of the present disclosure. The method is applied to a base station. As shown in FIG. 15, the method for reporting a power headroom report may include the following steps.

Step 1541, configuration information is transmitted to UE.

Step 1542, a power control parameter of one or more TRPs corresponding to at least one carrier is transmitted to the UE.

Step 1543, a trigger condition for PHR reporting corresponding to one or more TRPs is transmitted to the UE.

Step 1544, PHR reporting of one TRP corresponding to each carrier transmitted by the UE is received, and reported content of the PHR of one TRP includes a relevant first power parameter and an identity of the one TRP.

For relevant introductions about steps 1541-1544, reference may be made to the descriptions of the foregoing embodiments, and details are not repeated here in the embodiment of the present disclosure.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

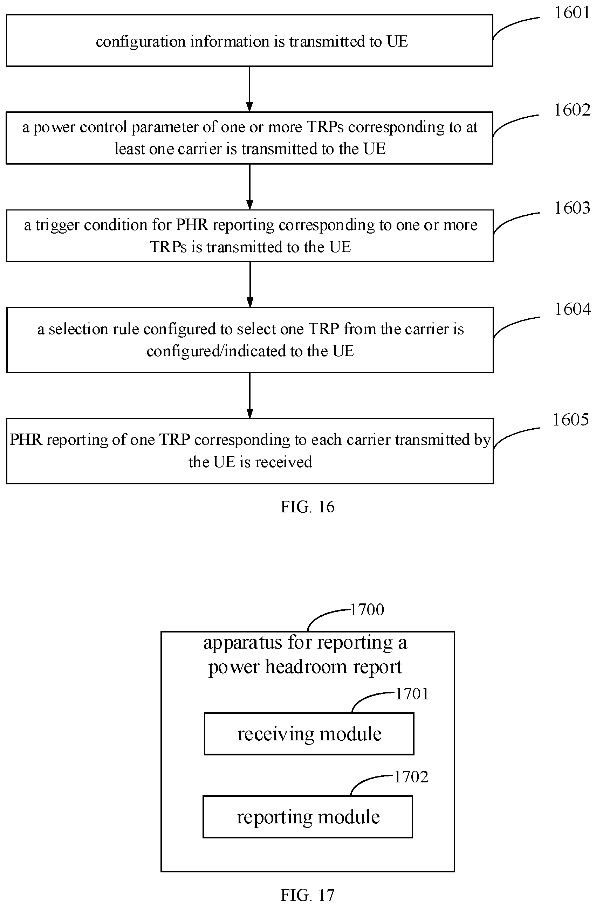

FIG. 16 is a schematic flowchart of a method for reporting a power headroom report provided by an embodiment of the present disclosure. The method is applied to a base station. As shown in FIG. 16 , the method for reporting a power headroom report may include the following steps.

Step 1601, configuration information is transmitted to UE.

Step 1602, a power control parameter of one or more TRPs corresponding to at least one carrier is transmitted to the UE.

Step 1603, a trigger condition for PHR reporting corresponding to one or more TRPs is transmitted to the UE.

Step 1604, a selection rule configured to select one TRP from the carrier is configured/indicated to the UE.

In an embodiment of the present disclosure, the selection rule may include:

Rule 1: selecting a TRP corresponding to a predefined transmission opportunity on the carrier as the one TPR; or

Rule 2: defaulting a certain TRP on the carrier as the one TRP.

For the related introduction about the rule 1 and rule 2, reference may be made to the above embodiments, and details are not repeated here in the embodiment of the present disclosure.

Step 1605, PHR reporting of one TRP corresponding to each carrier transmitted by the UE is received.

For related introductions about steps 1601-1603 and step 1605, reference may be made to the descriptions of the above embodiments, and details are not repeated here in the embodiment of the present disclosure.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources..

FIG. 17 is a schematic structural diagram of an apparatus 900 for reporting a power headroom report provided by an embodiment of the present disclosure. As shown in FIG. 17, the apparatus 1700 includes:

a receiving module 1701, configured to receive configuration information transmitted by a base station, in which the configuration information instructs the UE to support power headroom report PHR reporting of at least one TRP on one carrier;

the receiving module 1701 is further configured to receive a power control parameter of one or more TRPs corresponding to at least one carrier transmitted by the base station; and

the receiving module 1701 is further configured to receive a trigger condition for PHR reporting of one or more TRPs transmitted by the base station; and

a reporting module 1702, configured to trigger PHR reporting of at least one TRP corresponding to each carrier based on the power control parameter and the trigger condition for reporting.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

Optionally, in an embodiment of the present disclosure, the reporting module is further configured to: report a PHR of each TRP on the carrier to the base station, in response to determining based on the power control parameter and the trigger condition for reporting that the UE satisfies the trigger condition for reporting.

Optionally, in an embodiment of the present disclosure, the reporting module is further configured to: sort each TRP;

>    sort the PHR of each TRP according to a sorting order of the respective TRPs; and
>    transmit the PHR of each TRP sorted in order to the base station.

Optionally, in an embodiment of the present disclosure, the reporting module is further configured to: sort each TRP according to a predefined sorting rule;

>    sort each TRP according to a sorting rule provided by a protocol;
>    sort each TRP according to a sorting rule configured/indicated by a network; or
>    autonomously sort each TRP.

Optionally, in an embodiment of the present disclosure, the reporting module is further configured to: in response to the carrier being configured with power back-off, report maximum transmit power of each TRP on the carrier after the power back-off in order;

>    in response to the carrier being configured with a PUSCH and the UE having a real PUSCH transmission, report a power headroom of each TRP after the real PUSCH transmission in order;
>    in response to the carrier being configured with a PUSCH and the UE having a real PUSCH transmission, report a power headroom of each TRP after reference PUSCH transmission in order;
>    in response to the carrier being configured with a PUSCH and the UE not having a real PUSCH transmission, report a power headroom of each TRP after reference PUSCH transmission in order;
>    in response to the carrier being configured with a PUCCH and the UE having a real PUCCH transmission, report a power headroom of each TRP after the real PUCCH transmission in order;
>    in response to the carrier being configured with a PUCCH and the UE having a real PUCCH transmission, report a power headroom of each TRP after reference PUCCH transmission in order;
>    in response to the carrier being configured with a PUCCH and the UE not having a real PUCCH transmission, report a power headroom of each TRP after reference PUCCH transmission in order;
>    in response to the carrier being configured with an SRS and the UE having a real SRS transmission, report a power headroom of each TRP after the real SRS transmission in order;
>    in response to the carrier being configured with an SRS and the UE having a real SRS transmission, report a power headroom of each TRP after reference SRS transmission in order;
>    in response to the carrier being configured with an SRS and the UE not having a real SRS transmission, report a power headroom of each TRP after reference SRS transmission in order;
>    in response to the carrier being configured with a PRACH and the UE having a real PRACH transmission, report a power headroom of each TRP after the real PRACH transmission in order;
>    in response to the carrier being configured with a PRACH and the UE having a real PRACH transmission, report a power headroom of each TRP after reference PRACH transmission in order;
>    in response to the carrier being configured with a PRACH and the UE not having a real PRACH transmission, report a power headroom of each TRP after reference PRACH transmission in order;
>    report a power back-off value of each TRP in order; or
>    a power back-off value of the UE.

Optionally, in an embodiment of the present disclosure, the reporting module is further configured to report an identity of each TRP in order.

Optionally, in an embodiment of the present disclosure, the power control parameters include at least one of:

>    first information corresponding to a TRP on the carrier; or
>    second information corresponding to the carrier.

Optionally, in an embodiment of the present disclosure, the first information corresponding to the TRP on the carrier includes at least one of:

> identity information corresponding to the TRP on the carrier;
> identity information of a downlink path loss reference carrier corresponding to the TRP on the carrier;
> a downlink path loss change corresponding to the TRP on the carrier;
> an uplink power back-off change corresponding to the TRP on the carrier;
> a PHR periodic reporting timer corresponding to the TRP on the carrier;
> a PHR reporting prohibition timer corresponding to the TRP on the carrier;
> a maximum permissible exposure MPE power threshold corresponding to the TRP on the carrier;
> an MPE reporting prohibition timer corresponding to the TRP on the carrier;
> an uplink MPE power back-off change corresponding to the TRP on the carrier; or
> MPE millimeter wave FR2 reporting corresponding to the TRP on the carrier.

Optionally, in an embodiment of the present disclosure, the identity information corresponding to the TRP on the carrier includes at least one of:

> an uplink physical channel identity of the TRP on the carrier;
> a beam information identity of the TRP on the carrier;
> a sounding reference signal SRS resource set identity of the TRP on the carrier; or
> a power control parameter set identity of the TRP on the carrier.

Optionally, in an embodiment of the present disclosure, the uplink physical channel includes at least one of:

> a physical uplink control channel PUCCH;
> a physical uplink shared channel PUSCH;
> an SRS; or
> a physical random access channel PRACH.

Optionally, in an embodiment of the present disclosure, the second information corresponding to the carrier includes at least one of:

> identity information of a downlink path loss reference carrier corresponding to the carrier;
> a downlink path loss change corresponding to the carrier;
> an uplink power back-off change corresponding to the carrier;
> a PHR periodic reporting timer corresponding to the carrier;
> a PHR reporting prohibition timer corresponding to the carrier;
> an MPE power threshold corresponding to the carrier;
> an MPE reporting prohibition timer corresponding to the carrier;
> an uplink MPE power back-off change corresponding to the carrier; or
> MPE FR2 reporting corresponding to the carrier.

Optionally, in an embodiment of the present disclosure, the trigger condition for reporting includes at least one of:

> changing identity information corresponding to a TRP on the carrier;
> changing a downlink path loss reference carrier corresponding to a TRP on the carrier;
> changing a carrier for uplink physical channel transmission of a TRP on the carrier;
> a timeout of a PHR periodic reporting timer corresponding to a TRP on the carrier;
> a timeout of a PHR reporting prohibition timer corresponding to a TRP on the carrier, and an actual downlink path loss change corresponding to the TRP exceeding a downlink path loss change corresponding to the TRP on the carrier in the power control parameter;
> a timeout of a PHR reporting prohibition timer corresponding to a TRP on the carrier, and an actual uplink power back-off change corresponding to the TRP exceeding an uplink power back-off change of the TRP on the carrier in the power control parameter;
> a timeout of a PHR reporting prohibition timer corresponding to a TRP on the carrier, and an actual downlink path loss change corresponding to the TRP exceeding a downlink path loss change corresponding to the carrier in the power control parameter;
> a timeout of a PHR reporting prohibition timer corresponding to a TRP on the carrier, and an actual uplink power back-off change corresponding to the TRP exceeding an uplink power back-off change corresponding to the carrier in the power control parameter;

a timeout of a PHR periodic reporting timer corresponding to the carrier;

a timeout of a PHR reporting prohibition timer corresponding to the carrier, and an actual downlink path loss change corresponding to the TRP exceeding a downlink path loss change corresponding to a TRP on the carrier in the power control parameter;

a timeout of a PHR reporting prohibition timer corresponding to the carrier, and an actual uplink power back-off change corresponding to the TRP exceeding an uplink power back-off change corresponding to a TRP on the carrier in the power control parameter;

a timeout of a PHR reporting prohibition timer corresponding to the carrier, and an actual downlink path loss change corresponding to the TRP exceeding a downlink path loss change corresponding to the carrier in the power control parameter;

a timeout of a PHR reporting prohibition timer corresponding to the carrier, and an actual uplink power back-off change corresponding to the TRP exceeding an uplink power back-off change corresponding to the carrier in the power control parameter;

changing a downlink path loss reference carrier corresponding to the carrier;

configuring MPE FR2 reporting corresponding to the TRP on the carrier, and an MPE power back-off change corresponding to the TRP exceeding an MPE power threshold corresponding to the TRP on the carrier in the power control parameter;

configuring MPE FR2 reporting corresponding to the TRP on the carrier, and an MPE power back-off change corresponding to the TRP exceeding an uplink MPE power back-off change corresponding to the TRP on the carrier in the power control parameter;

configuring MPE FR2 reporting corresponding to the TRP on the carrier, and an MPE power back-off change corresponding to the TRP exceeding an MPE power threshold corresponding to the carrier in the power control parameter;

configuring MPE FR2 reporting corresponding to the TRP on the carrier, and an MPE power back-off change corresponding to the TRP exceeding an uplink MPE power back-off change corresponding to the carrier in the power control parameter;

configuring MPE FR2 reporting corresponding to the carrier, and an MPE power back-off change corresponding to the TRP exceeding an MPE power threshold corresponding to the TRP on the carrier in the power control parameter;

configuring MPE FR2 reporting corresponding to the carrier, and an MPE power back-off change corresponding to the TRP exceeding an uplink MPE power back-off change corresponding to the TRP on the carrier in the power control parameter;

configuring MPE FR2 reporting corresponding to the carrier, and an MPE power back-off change corresponding to the TRP exceeding an MPE power threshold corresponding to the carrier in the power control parameter;

configuring MPE FR2 reporting corresponding to the carrier, and an MPE power back-off change corresponding to the TRP exceeding an uplink MPE power back-off change corresponding to the carrier in the power control parameter;

a timeout of an MPE reporting prohibition timer corresponding to the TRP on the carrier; or

a timeout of an MPE reporting prohibition timer corresponding to the carrier.

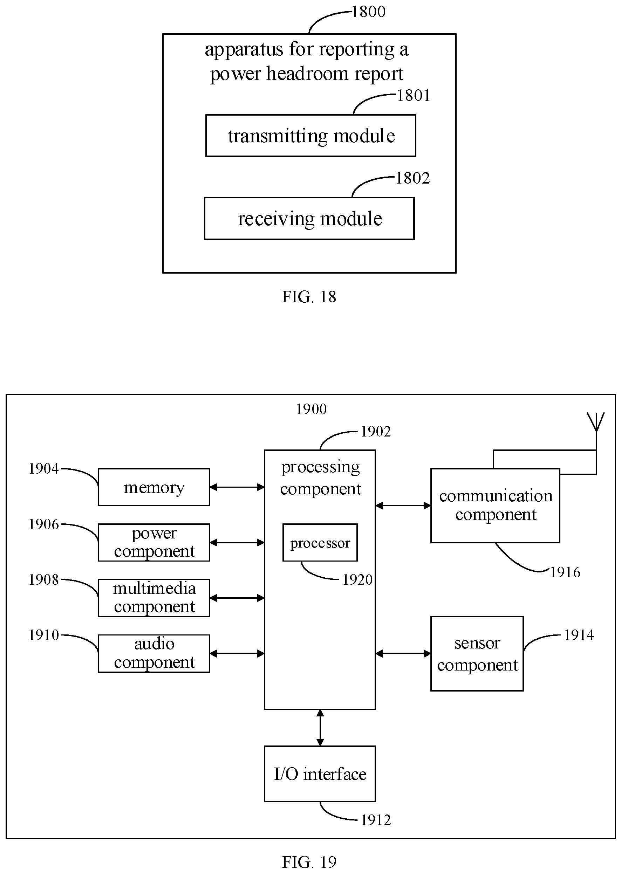

FIG. 18 is a schematic structural diagram of an apparatus 1000 for reporting a power headroom report provided by an embodiment of the present disclosure. As shown in FIG. 18 , the apparatus 1800 includes:

a transmitting module 1801, configured to transmit configuration information to a UE, in which the configuration information instructs the UE to support PHR reporting of at least one TRP on one carrier;

the transmitting module 1801 is further configured to transmit a power control parameter of one or more TRPs corresponding to at least one carrier to the UE; and

the transmitting module 1801 is further configured to transmit a trigger condition for PHR reporting of one or more TRPs to the UE; and

a receiving module 1802, configured to receive a PHR of at least one TRP corresponding to each carrier transmitted by the UE.

To sum up, in the method for reporting a power headroom report provided by the embodiments of the present disclosure, the UE will receive the power control parameter of at least one TRP corresponding to at least one carrier and the trigger condition for PHR reporting corresponding to at least one TRP transmitted by the base station. Then, the base station triggers PHR reporting of at least two TRPs corresponding to each carrier based on the power control parameter and the trigger condition for reporting. It can be seen that, the embodiments of the present disclosure provide a method for PHR reporting applicable to a multi-TRP scenario. Moreover, in the method provided by the embodiments of the present disclosure, the power control parameter includes not only a power control parameter corresponding to the carrier, but also a power control parameter corresponding to the TRP on the carrier. The trigger condition for PHR reporting includes not only a trigger condition based on the power control parameter corresponding to the carrier, but also a trigger condition based on the power control parameter corresponding to the TRP on the carrier. Therefore, the configurations of the power control parameter and the trigger condition for PHR reporting are enhanced.

In the embodiments of the present disclosure, when reporting the PHR, multiple options are added for the reported content, and the reported content is enriched and enhanced without increasing the amount of reported data. At the same time, in the embodiments of the present disclosure, a TRP identity is also reported when the PHR is reported, so that the base station can know the TRP corresponding to the reported PHR, so as to better support dynamic scheduling in different conditions of different channels, to realize precise power control and ensure effective allocation of network resources.

Optionally, in an embodiment of the present disclosure, the receiving module is further configured to:
receive a PHR of each TRP on each carrier transmitted by the UE.

Optionally, in an embodiment of the present disclosure, the apparatus is further configured to:
configure/indicate a sorting rule to the UE for sorting each TRP.

Optionally, in an embodiment of the present disclosure, the receiving module is further configured to:

in response to the carrier being configured with power back-off, receiving maximum transmit power of each TRP on the carrier after the power back-off in order;
in response to the carrier being configured with a PUSCH and the UE having a real PUSCH transmission, receiving a power headroom of each TRP after the real PUSCH transmission in order;
in response to the carrier being configured with a PUSCH and the UE having a real PUSCH transmission, receiving a power headroom of each TRP after reference PUSCH transmission in order;
in response to the carrier being configured with a PUSCH and the UE not having a real PUSCH transmission, receiving a power headroom of each TRP after reference PUSCH transmission in order;
in response to the carrier being configured with a PUCCH and the UE having a real PUCCH transmission, receiving a power headroom of each TRP after the real PUCCH transmission in order;
in response to the carrier being configured with a PUCCH and the UE having a real PUCCH transmission, receiving a power headroom of each TRP after reference PUCCH transmission in order;
in response to the carrier being configured with a PUCCH and the UE not having a real PUCCH transmission, receiving a power headroom of each TRP after reference PUCCH transmission in order;
in response to the carrier being configured with an SRS and the UE having a real SRS transmission, receiving a power headroom of each TRP after the real SRS transmission in order;
in response to the carrier being configured with an SRS and the UE having a real SRS transmission, receiving a power headroom of each TRP after reference SRS transmission in order;
in response to the carrier being configured with an SRS and the UE not having a real SRS transmission, receiving a power headroom of each TRP after reference SRS transmission in order;
in response to the carrier being configured with a PRACH and the UE having a real PRACH transmission, receiving a power headroom of each TRP after the real PRACH transmission in order;
in response to the carrier being configured with a PRACH and the UE having a real PRACH transmission, receiving a power headroom of each TRP after reference PRACH transmission in order;
in response to the carrier being configured with a PRACH and the UE not having a real PRACH transmission, receiving a power headroom of each TRP after reference PRACH transmission in order;
receiving a power back-off value of each TRP in order; or
a power back-off value of the UE.

Optionally, in an embodiment of the present disclosure, the receiving module is further configured to:
receiving an identity of each TRP in order.

Optionally, in an embodiment of the present disclosure, the power control parameter includes at least one of:

first information corresponding to a TRP on the carrier; or
second information corresponding to the carrier.

Optionally, in an embodiment of the present disclosure, the first information corresponding to the TRP on the carrier includes at least one of:

identity information corresponding to the TRP on the carrier;
identity information of a downlink path loss reference carrier corresponding to the TRP on the carrier;
a downlink path loss change corresponding to the TRP on the carrier;

an uplink power back-off change corresponding to the TRP on the carrier;
a PHR periodic reporting timer corresponding to the TRP on the carrier;
a PHR reporting prohibition timer corresponding to the TRP on the carrier;
an MPE power threshold corresponding to the TRP on the carrier;
an MPE reporting prohibition timer corresponding to the TRP on the carrier;
an uplink MPE power back-off change corresponding to the TRP on the carrier; or
MPE millimeter wave FR2 reporting corresponding to the TRP on the carrier.

Optionally, in an embodiment of the present disclosure, the identity information corresponding to the TRP on the carrier includes at least one of:

an uplink physical channel identity of the TRP on the carrier;
a beam information identity of the TRP on the carrier;
an SRS resource set identity of the TRP on the carrier; or
a power control parameter set identity of the TRP on the carrier.

Optionally, in an embodiment of the present disclosure, the uplink physical channel includes at least one of:

a PUCCH;
a PUSCH;
an SRS; or
a PRACH.

Optionally, in an embodiment of the present disclosure, the second information corresponding to the carrier includes at least one of:

identity information of a downlink path loss reference carrier corresponding to the carrier;
a downlink path loss change corresponding to the carrier;
an uplink power back-off change corresponding to the carrier;
a PHR periodic reporting timer corresponding to the carrier;
a PHR reporting prohibition timer corresponding to the carrier;
an MPE power threshold corresponding to the carrier;
an MPE reporting prohibition timer corresponding to the carrier;
an uplink MPE power back-off change corresponding to the carrier; or
MPE FR2 reporting corresponding to the carrier.

Optionally, in an embodiment of the present disclosure, the trigger condition for reporting includes at least one of:

changing identity information corresponding to a TRP on the carrier;
changing a downlink path loss reference carrier corresponding to a TRP on the carrier;
changing a carrier for uplink physical channel transmission of a TRP on the carrier;
a timeout of a PHR periodic reporting timer corresponding to a TRP on the carrier;
a timeout of a PHR reporting prohibition timer corresponding to a TRP on the carrier, and an actual downlink path loss change corresponding to the TRP exceeding a downlink path loss change corresponding to the TRP on the carrier in the power control parameter;
a timeout of a PHR reporting prohibition timer corresponding to a TRP on the carrier, and an actual uplink power back-off change corresponding to the TRP exceeding an uplink power back-off change of the TRP on the carrier in the power control parameter;
a timeout of a PHR reporting prohibition timer corresponding to a TRP on the carrier, and an actual downlink path loss change corresponding to the TRP exceeding a downlink path loss change corresponding to the carrier in the power control parameter;
a timeout of a PHR reporting prohibition timer corresponding to a TRP on the carrier, and an actual uplink power back-off change corresponding to the TRP exceeding an uplink power back-off change corresponding to the carrier in the power control parameter;
a timeout of a PHR periodic reporting timer corresponding to the carrier;
a timeout of a PHR reporting prohibition timer corresponding to the carrier, and an actual downlink path loss change corresponding to the TRP exceeding a downlink path loss change corresponding to a TRP on the carrier in the power control parameter;

a timeout of a PHR reporting prohibition timer corresponding to the carrier, and an actual uplink power back-off change corresponding to the TRP exceeding an uplink power back-off change corresponding to a TRP on the carrier in the power control parameter;

a timeout of a PHR reporting prohibition timer corresponding to the carrier, and an actual downlink path loss change corresponding to the TRP exceeding a downlink path loss change corresponding to the carrier in the power control parameter;

a timeout of a PHR reporting prohibition timer corresponding to the carrier, and an actual uplink power back-off change corresponding to the TRP exceeding an uplink power back-off change corresponding to the carrier in the power control parameter;

changing a downlink path loss reference carrier corresponding to the carrier;

configuring MPE FR2 reporting corresponding to the TRP on the carrier, and an MPE power back-off change corresponding to the TRP exceeding an MPE power threshold corresponding to the TRP on the carrier in the power control parameter;

configuring MPE FR2 reporting corresponding to the TRP on the carrier, and an MPE power back-off change corresponding to the TRP exceeding an uplink MPE power back-off change corresponding to the TRP on the carrier in the power control parameter;

configuring MPE FR2 reporting corresponding to the TRP on the carrier, and an MPE power back-off change corresponding to the TRP exceeding an MPE power threshold corresponding to the carrier in the power control parameter;

configuring MPE FR2 reporting corresponding to the TRP on the carrier, and an MPE power back-off change corresponding to the TRP exceeding an uplink MPE power back-off change corresponding to the carrier in the power control parameter;

configuring MPE FR2 reporting corresponding to the carrier, and an MPE power back-off change corresponding to the TRP exceeding an MPE power threshold corresponding to the TRP on the carrier in the power control parameter;

configuring MPE FR2 reporting corresponding to the carrier, and an MPE power back-off change corresponding to the TRP exceeding an uplink MPE power back-off change corresponding to the TRP on the carrier in the power control parameter;

configuring MPE FR2 reporting corresponding to the carrier, and an MPE power back-off change corresponding to the TRP exceeding an MPE power threshold corresponding to the carrier in the power control parameter;

configuring MPE FR2 reporting corresponding to the carrier, and an MPE power back-off change corresponding to the TRP exceeding an uplink MPE power back-off change corresponding to the carrier in the power control parameter;

a timeout of an MPE reporting prohibition timer corresponding to the TRP on the carrier; or

a timeout of an MPE reporting prohibition timer corresponding to the carrier.

A computer storage medium provided by embodiments of the present disclosure stores an executable program; when the executable program is executed by a processor, the method shown in any one of FIGS. 1 to 7 or 8 to 16 can be implemented.

In order to realize the above-mentioned embodiments, the present disclosure further proposes a computer program product, including a computer program. When the computer program is executed by a processor, the method shown in any one of FIGS. 1 to 7 or 8 to 16 is implemented.

In addition, in order to realize the above-mentioned embodiments, the present disclosure further proposes a computer program. When the program is executed by a processor, the method as shown in any one of FIG. 1 to FIG. 7 or FIG. 8 to FIG. 16 can be implemented.

FIG. 19 is a block diagram of a user equipment 1900 provided by an embodiment of the present disclosure. For example, the UE 1900 may be a mobile phone, computer, digital broadcast terminal, messaging device, game console, tablet device, medical device, fitness device, personal digital assistant, and the like.

Referring to FIG. 19, the UE 1900 may include at least one of the following components: a processing component 1902, a memory 1904, a power component 1906, a multimedia component 1908, an audio component 1910, an input/output (I/O) interface 1912, a sensor component 1913, and a communication component 1916.

The processing component 1902 typically controls overall operations of the UE 1900, such as the operations associated with display, telephone calls, data communications, camera operations, and recording operations. The processing component 1902 may include at least one processor 1920 to execute instructions to perform all or part of the steps in the above described method. Moreover, the processing component 1902 may include at least one module which facilitates the interaction between the processing component 1902 and other components. For example, the processing component 1902 may include a multimedia module to facilitate the interaction between the multimedia component 1908 and the processing component 1902.

The memory 1904 is configured to store various types of data to support the operation of the UE 1900. Examples of such data include instructions for any applications or methods operated on the UE 1900, contact data, phonebook data, messages, pictures, video, etc. The memory 1904 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a programmable read-only memory (PROM), a Read-Only Memory (ROM), a magnetic memory, a flash memory, a magnetic or optical disk.

The power component 1906 provides power to various components of the UE 1900. The power component 1906 may include a power management system, one or more power sources, and any other components associated with the generation, management, and distribution of power in the UE 1900.

The multimedia component 1908 includes a screen providing an output interface between the UE 1900 and the user. In some embodiments, the screen may include a Liquid Crystal Display (LCD) and a Touch Panel (TP). In a case that the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a period of time and a pressure associated with the touch or swipe action. In some embodiments, the multimedia component 1908 includes a front-facing camera and/or a rear-facing camera. When the UE 1900 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1910 is configured to output and/or input audio signals. For example, the audio component 1910 includes a microphone (MIC) configured to receive an external audio signal when the UE 1900 is in an operation mode, such as a call mode, a recording mode, and a voice recognition mode. The received audio signal may be further stored in the memory 1904 or transmitted via the communication component 1916. In some embodiments, the audio component 1910 further includes a speaker to output audio signals.

The I/O interface 1912 provides an interface between the processing component 1902 and peripheral interface modules, such as a keyboard, a click wheel, buttons, and the like. The buttons may include, but are not limited to, a home button, a volume button, a starting button, and a locking button.

The sensor component 1913 includes one or more sensors to provide status assessments of various aspects of the UE 1900. For instance, the sensor component 1913 may detect an open/closed status of the UE 1900, relative positioning of components, e.g., the display and the keypad of the UE 1900, and the sensor component 1913 may further detect a change in position of the UE 1900 or a component of the UE 1900, a presence or absence of user contact with the UE 1900, an orientation or an acceleration/deceleration of the UE 1900, and a change in temperature of the UE 1900. The sensor component 1913 may include a proximity sensor configured to detect the presence of nearby objects without any physical contact. The sensor component 1913 may also include a light sensor, such as a CMOS or CCD image sensor, for use in imaging applications. In some embodiments, the sensor component 1913 may also include an accelerometer sensor, a gyroscope sensor, a magnetic sensor, a pressure sensor, or a temperature sensor.

The communication component 1916 is configured to facilitate communication, wired or wirelessly, between the UE 1900 and other devices. The user equipment 800 can access a wireless network based on a communication standard, such as WiFi, 2G or 3G, or a combination thereof. In an exemplary embodiment, the communication component 1916 receives a broadcast signal or broadcast associated information from an external broadcast management system via a physical broadcast channel. In an embodiment, the communication component 1916 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In exemplary embodiments, the UE 1900 may be implemented with at least one application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

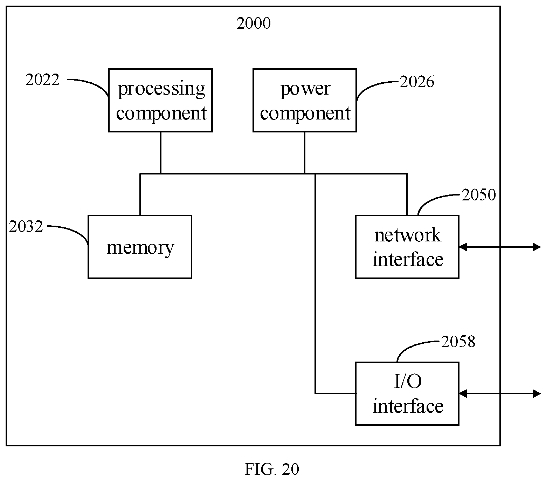

Fig. 20 shows a structure of a base station according to an embodiment. For example, the base station 2000 may be provided as a base station. Referring to FIG. 20, the base station 2000 includes a processing component 2011, which further includes one or more processors, and a memory resource represented by a memory 2032 for storing instructions executable by the processing component 2022, such as application programs. The application program stored in the memory 2032 may include one or more modules each corresponding to a set of instructions. In addition, the processing component 2015 is configured to execute instructions to perform the above method applied to the base station, for example, the method shown in Fig. 1.

The base station 2000 may also include a power component 2026 configured to perform power management of the base station 2000, a wired or wireless network interface 2050 configured to connect the base station 2000 to a network, and an input-output (I/O) interface 2058. The base station 2000 can operate based on an operating system stored in the memory 2032, such as Windows Server™, Mac OS X™, Unix™, Linux™, FreeBSD™ or the like.

Other implementations of the present disclosure will be readily apparent to those skilled in the art from consideration of the specification and practice of the invention disclosed herein. The present disclosure is intended to cover any modification, use or adaptation of the present disclosure, these modifications, uses or adaptations follow the general principle of the invention and include common knowledge or conventional technical means in the technical field not disclosed in the present disclosure. The specification and embodiments are to be considered exemplary only, with a true scope and spirit of the disclosure being indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

**Claims**

1.  A method for reporting a power headroom report, applied to a user equipment UE, comprising:

    receiving configuration information transmitted by a base station, wherein the configuration information instructs the UE to support power headroom report PHR reporting of one or more transmission and reception points TRPs on one carrier;
    receiving a power control parameter of at least one TRP corresponding to at least one carrier transmitted by the base station;
    receiving a trigger condition for PHR reporting of at least one TRP transmitted by the base station; and
    triggering PHR reporting of at least two TRPs corresponding to each carrier based on the power control parameter and the trigger condition for reporting.

2.  The method according to claim 1, wherein triggering the PHR reporting of the at least two TRPs corresponding to each carrier based on the power control parameter and the trigger condition for reporting, comprises:
    reporting a PHR of each TRP on the carrier to the base station, in response to determining based on the power control parameter and the trigger condition for reporting that the UE satisfies the trigger condition for reporting.

3.  The method according to claim 2, wherein transmitting the PHR of each TRP on the carrier to the base station, comprises:

    sorting each TRP;
    sorting the PHR of each TRP according to a sorting order of the respective TRPs; and
    transmitting the PHR of each TRP sorted in order to the base station.

4.  The method according to claim 3, wherein sorting each TRP comprises at least one of:

    sorting each TRP according to a predefined sorting rule;
    sorting each TRP according to a sorting rule provided by a protocol;
    sorting each TRP according to a sorting rule configured/indicated by a network; or
    autonomously sorting each TRP.

5.  The method according to claim 4, wherein reporting the PHR of each TRP on the carrier to the base station comprises at least one of:

    in response to the carrier being configured with power back-off, reporting maximum transmit power of each TRP on the carrier after the power back-off in order;
    in response to the carrier being configured with a PUSCH and the UE having a real PUSCH transmission, reporting a power headroom of each TRP after the real PUSCH transmission in order;
    in response to the carrier being configured with a PUSCH and the UE having a real PUSCH transmission, reporting a power headroom of each TRP after reference PUSCH transmission in order;
    in response to the carrier being configured with a PUSCH and the UE not having a real PUSCH transmission, reporting a power headroom of each TRP after reference PUSCH transmission in order;
    in response to the carrier being configured with a PUCCH and the UE having a real PUCCH transmission, reporting a power headroom of each TRP after the real PUCCH transmission in order;
    in response to the carrier being configured with a PUCCH and the UE having a real PUCCH transmission, reporting a power headroom of each TRP after reference PUCCH transmission in order;

in response to the carrier being configured with a PUCCH and the UE not having a real PUCCH transmission, reporting a power headroom of each TRP after reference PUCCH transmission in order;

in response to the carrier being configured with an SRS and the UE having a real SRS transmission, reporting a power headroom of each TRP after the real SRS transmission in order;

in response to the carrier being configured with an SRS and the UE having a real SRS transmission, reporting a power headroom of each TRP after reference SRS transmission in order;

in response to the carrier being configured with an SRS and the UE not having a real SRS transmission, reporting a power headroom of each TRP after reference SRS transmission in order;

in response to the carrier being configured with a PRACH and the UE having a real PRACH transmission, reporting a power headroom of each TRP after the real PRACH transmission in order;

in response to the carrier being configured with a PRACH and the UE having a real PRACH transmission, reporting a power headroom of each TRP after reference PRACH transmission in order;

in response to the carrier being configured with a PRACH and the UE not having a real PRACH transmission, reporting a power headroom of each TRP after reference PRACH transmission in order;

reporting a power back-off value of each TRP in order; or

a power back-off value of the UE.

6. The method according to claim 5, wherein reporting the PHR of each TRP on the carrier to the base station further comprises:

reporting an identity of each TRP in order.

7. The method according to claim 1, wherein the power control parameter comprises at least one of:

first information corresponding to a TRP on the carrier; or
second information corresponding to the carrier.

8. The method according to claim 7, wherein the first information corresponding to the TRP on the carrier comprises at least one of:

identity information corresponding to the TRP on the carrier;
identity information of a downlink path loss reference carrier corresponding to the TRP on the carrier;
a downlink path loss change corresponding to the TRP on the carrier;
an uplink power back-off change corresponding to the TRP on the carrier;
a PHR periodic reporting timer corresponding to the TRP on the carrier;
a PHR reporting prohibition timer corresponding to the TRP on the carrier;
a maximum permissible exposure MPE power threshold corresponding to the TRP on the carrier;
an MPE reporting prohibition timer corresponding to the TRP on the carrier;
an uplink MPE power back-off change corresponding to the TRP on the carrier; or
MPE millimeter wave FR2 reporting corresponding to the TRP on the carrier.

9. The method according to claim 8, wherein the identity information corresponding to the TRP on the carrier comprises at least one of:

an uplink physical channel identity of the TRP on the carrier;
a beam information identity of the TRP on the carrier;
a sounding reference signal SRS resource set identity of the TRP on the carrier; or
a power control parameter set identity of the TRP on the carrier.

10. The method according to claim 9, wherein the uplink physical channel comprises at least one of:

a physical uplink control channel PUCCH;
a physical uplink shared channel PUSCH;
an SRS; or
a physical random access channel PRACH.

11. The method according to claim 7, wherein the second information corresponding to the carrier comprises at least one of:

identity information of a downlink path loss reference carrier corresponding to the carrier;

a downlink path loss change corresponding to the carrier;

an uplink power back-off change corresponding to the carrier;

a PHR periodic reporting timer corresponding to the carrier;

a PHR reporting prohibition timer corresponding to the carrier;

an MPE power threshold corresponding to the carrier;

an MPE reporting prohibition timer corresponding to the carrier;

an uplink MPE power back-off change corresponding to the carrier; or

MPE FR2 reporting corresponding to the carrier.

12. The method according to claim 1, wherein the trigger condition for reporting comprises at least one of:

changing identity information corresponding to a TRP on the carrier;

changing a downlink path loss reference carrier corresponding to a TRP on the carrier;

changing a carrier for uplink physical channel transmission of a TRP on the carrier;

a timeout of a PHR periodic reporting timer corresponding to a TRP on the carrier;

a timeout of a PHR reporting prohibition timer corresponding to a TRP on the carrier, and an actual downlink path loss change corresponding to the TRP exceeding a downlink path loss change corresponding to the TRP on the carrier in the power control parameter;

a timeout of a PHR reporting prohibition timer corresponding to a TRP on the carrier, and an actual uplink power back-off change corresponding to the TRP exceeding an uplink power back-off change of the TRP on the carrier in the power control parameter;

a timeout of a PHR reporting prohibition timer corresponding to a TRP on the carrier, and an actual downlink path loss change corresponding to the TRP exceeding a downlink path loss change corresponding to the carrier in the power control parameter;

a timeout of a PHR reporting prohibition timer corresponding to a TRP on the carrier, and an actual uplink power back-off change corresponding to the TRP exceeding an uplink power back-off change corresponding to the carrier in the power control parameter;

a timeout of a PHR periodic reporting timer corresponding to the carrier;

a timeout of a PHR reporting prohibition timer corresponding to the carrier, and an actual downlink path loss change corresponding to the TRP exceeding a downlink path loss change corresponding to a TRP on the carrier in the power control parameter;

a timeout of a PHR reporting prohibition timer corresponding to the carrier, and an actual uplink power back-off change corresponding to the TRP exceeding an uplink power back-off change corresponding to a TRP on the carrier in the power control parameter;

a timeout of a PHR reporting prohibition timer corresponding to the carrier, and an actual downlink path loss change corresponding to the TRP exceeding a downlink path loss change corresponding to the carrier in the power control parameter;

a timeout of a PHR reporting prohibition timer corresponding to the carrier, and an actual uplink power back-off change corresponding to the TRP exceeding an uplink power back-off change corresponding to the carrier in the power control parameter;

changing a downlink path loss reference carrier corresponding to the carrier;

configuring MPE FR2 reporting corresponding to the TRP on the carrier, and an MPE power back-off change corresponding to the TRP exceeding an MPE power threshold corresponding to the TRP on the carrier in the power control parameter;

configuring MPE FR2 reporting corresponding to the TRP on the carrier, and an MPE power back-off change corresponding to the TRP exceeding an uplink MPE power back-off change corresponding to the TRP on the carrier in the power control parameter;

configuring MPE FR2 reporting corresponding to the TRP on the carrier, and an MPE power back-off change corresponding to the TRP exceeding an MPE power threshold corresponding to the carrier in the power control parameter;

configuring MPE FR2 reporting corresponding to the TRP on the carrier, and an MPE power back-off change corresponding to the TRP exceeding an uplink MPE power back-off change corresponding to the carrier in the power control parameter;

configuring MPE FR2 reporting corresponding to the carrier, and an MPE power back-off change corresponding to the TRP exceeding an MPE power threshold corresponding to the TRP on the carrier in the power control parameter;

configuring MPE FR2 reporting corresponding to the carrier, and an MPE power back-off change corresponding to the TRP exceeding an uplink MPE power back-off change corresponding to the TRP on the carrier in the power control parameter;

configuring MPE FR2 reporting corresponding to the carrier, and an MPE power back-off change corresponding to the TRP exceeding an MPE power threshold corresponding to the carrier in the power control parameter;

configuring MPE FR2 reporting corresponding to the carrier, and an MPE power back-off change corresponding to the TRP exceeding an uplink MPE power back-off change corresponding to the carrier in the power control parameter;

a timeout of an MPE reporting prohibition timer corresponding to the TRP on the carrier; or

a timeout of an MPE reporting prohibition timer corresponding to the carrier.

13. A method for reporting a power headroom report, applied to a base station, comprising:

transmitting configuration information to a UE, wherein the configuration information instructs the UE to support PHR reporting of one or more TRPs on one carrier;

transmitting a power control parameter of at least one TRP corresponding to at least one carrier to the UE;

transmitting a trigger condition for reporting of at least one TRP to the UE; and

receiving PHRs of at least two TRPs corresponding to each carrier transmitted by the UE.

14. The method according to claim 13, wherein receiving PHR reporting of at least two TRPs corresponding to each carrier transmitted by the UE, comprises:

receiving a PHR of each TRP on each carrier transmitted by the UE.

15. The method of claim 14, further comprising:

configuring/indicating a sorting rule to the UE for sorting each TRP.

16. The method according to claim 15, wherein receiving the PHR of each TRP on each carrier transmitted by the UE comprises at least one of:

in response to the carrier being configured with power back-off, receiving maximum transmit power of each TRP on the carrier after the power back-off in order;

in response to the carrier being configured with a PUSCH and the UE having a real PUSCH transmission, receiving a power headroom of each TRP after the real PUSCH transmission in order;

in response to the carrier being configured with a PUSCH and the UE having a real PUSCH transmission, receiving a power headroom of each TRP after reference PUSCH transmission in order;

in response to the carrier being configured with a PUSCH and the UE not having a real PUSCH transmission, receiving a power headroom of each TRP after reference PUSCH transmission in order;

in response to the carrier being configured with a PUCCH and the UE having a real PUCCH transmission, receiving a power headroom of each TRP after the real PUCCH transmission in order;

in response to the carrier being configured with a PUCCH and the UE having a real PUCCH transmission, receiving a power headroom of each TRP after reference PUCCH transmission in order;

in response to the carrier being configured with a PUCCH and the UE not having a real PUCCH transmission, receiving a power headroom of each TRP after reference PUCCH transmission in order;

in response to the carrier being configured with an SRS and the UE having a real SRS transmission, receiving a power headroom of each TRP after the real SRS transmission in order;

in response to the carrier being configured with an SRS and the UE having a real SRS transmission, receiving a power headroom of each TRP after reference SRS transmission in order;

in response to the carrier being configured with an SRS and the UE not having a real SRS transmission, receiving a power headroom of each TRP after reference SRS transmission in order;

in response to the carrier being configured with a PRACH and the UE having a real PRACH transmission, receiving a power headroom of each TRP after the real PRACH transmission in order;

in response to the carrier being configured with a PRACH and the UE having a real PRACH transmission, receiving a power headroom of each TRP after reference PRACH transmission in order;

in response to the carrier being configured with a PRACH and the UE not having a real PRACH transmission, receiving a power headroom of each TRP after reference PRACH transmission in order;

receiving a power back-off value of each TRP in order; or

a power back-off value of the UE.

17. The method according to claim 16, wherein receiving the PHR of each TRP on each carrier transmitted by the UE further comprises:
receiving an identity of each TRP in order.

18. The method according to claim 13, wherein the power control parameter comprises at least one of:

first information corresponding to a TRP on the carrier; or
second information corresponding to the carrier.

19. The method according to claim 18, wherein the first information corresponding to the TRP on the carrier comprises at least one of:

identity information corresponding to the TRP on the carrier;
identity information of a downlink path loss reference carrier corresponding to the TRP on the carrier;
a downlink path loss change corresponding to the TRP on the carrier;
an uplink power back-off change corresponding to the TRP on the carrier;
a PHR periodic reporting timer corresponding to the TRP on the carrier;
a PHR reporting prohibition timer corresponding to the TRP on the carrier;
an MPE power threshold corresponding to the TRP on the carrier;
an MPE reporting prohibition timer corresponding to the TRP on the carrier;
an uplink MPE power back-off change corresponding to the TRP on the carrier; or
MPE millimeter wave FR2 reporting corresponding to the TRP on the carrier.

20. The method according to claim 19, wherein the identity information corresponding to the TRP on the carrier comprises at least one of:

an uplink physical channel identity of the TRP on the carrier;
a beam information identity of the TRP on the carrier;
an SRS resource set identity of the TRP on the carrier; or
a power control parameter set identity of the TRP on the carrier.

21. The method according to claim 20, wherein the uplink physical channel comprises at least one of:

a PUCCH;
a PUSCH;
an SRS; or
a PRACH.

22. The method according to claim 19, wherein the second information corresponding to the carrier comprises at least one of:

identity information of a downlink path loss reference carrier corresponding to the carrier;
a downlink path loss change corresponding to the carrier;
an uplink power back-off change corresponding to the carrier;
a PHR periodic reporting timer corresponding to the carrier;
a PHR reporting prohibition timer corresponding to the carrier;
an MPE power threshold corresponding to the carrier;
an MPE reporting prohibition timer corresponding to the carrier;
an uplink MPE power back-off change corresponding to the carrier; or
MPE FR2 reporting corresponding to the carrier.

23. The method according to claim 13, wherein the trigger condition for reporting comprises at least one of:

changing identity information corresponding to a TRP on the carrier;
changing a downlink path loss reference carrier corresponding to a TRP on the carrier;
changing a carrier for uplink physical channel transmission of a TRP on the carrier;
a timeout of a PHR periodic reporting timer corresponding to a TRP on the carrier;
a timeout of a PHR reporting prohibition timer corresponding to a TRP on the carrier, and an actual downlink path loss change corresponding to the TRP exceeding a downlink path loss change corresponding to the TRP on the carrier in the power control parameter;

a timeout of a PHR reporting prohibition timer corresponding to a TRP on the carrier, and an actual uplink power back-off change corresponding to the TRP exceeding an uplink power back-off change of the TRP on the carrier in the power control parameter;

a timeout of a PHR reporting prohibition timer corresponding to a TRP on the carrier, and an actual downlink path loss change corresponding to the TRP exceeding a downlink path loss change corresponding to the carrier in the power control parameter;

a timeout of a PHR reporting prohibition timer corresponding to a TRP on the carrier, and an actual uplink power back-off change corresponding to the TRP exceeding an uplink power back-off change corresponding to the carrier in the power control parameter;

a timeout of a PHR periodic reporting timer corresponding to the carrier;

a timeout of a PHR reporting prohibition timer corresponding to the carrier, and an actual downlink path loss change corresponding to the TRP exceeding a downlink path loss change corresponding to a TRP on the carrier in the power control parameter;

a timeout of a PHR reporting prohibition timer corresponding to the carrier, and an actual uplink power back-off change corresponding to the TRP exceeding an uplink power back-off change corresponding to a TRP on the carrier in the power control parameter;

a timeout of a PHR reporting prohibition timer corresponding to the carrier, and an actual downlink path loss change corresponding to the TRP exceeding a downlink path loss change corresponding to the carrier in the power control parameter;

a timeout of a PHR reporting prohibition timer corresponding to the carrier, and an actual uplink power back-off change corresponding to the TRP exceeding an uplink power back-off change corresponding to the carrier in the power control parameter;

changing a downlink path loss reference carrier corresponding to the carrier;

configuring MPE FR2 reporting corresponding to the TRP on the carrier, and an MPE power back-off change corresponding to the TRP exceeding an MPE power threshold corresponding to the TRP on the carrier in the power control parameter;

configuring MPE FR2 reporting corresponding to the TRP on the carrier, and an MPE power back-off change corresponding to the TRP exceeding an uplink MPE power back-off change corresponding to the TRP on the carrier in the power control parameter;

configuring MPE FR2 reporting corresponding to the TRP on the carrier, and an MPE power back-off change corresponding to the TRP exceeding an MPE power threshold corresponding to the carrier in the power control parameter;

configuring MPE FR2 reporting corresponding to the TRP on the carrier, and an MPE power back-off change corresponding to the TRP exceeding an uplink MPE power back-off change corresponding to the carrier in the power control parameter;

configuring MPE FR2 reporting corresponding to the carrier, and an MPE power back-off change corresponding to the TRP exceeding an MPE power threshold corresponding to the TRP on the carrier in the power control parameter;

configuring MPE FR2 reporting corresponding to the carrier, and an MPE power back-off change corresponding to the TRP exceeding an uplink MPE power back-off change corresponding to the TRP on the carrier in the power control parameter;

configuring MPE FR2 reporting corresponding to the carrier, and an MPE power back-off change corresponding to the TRP exceeding an MPE power threshold corresponding to the carrier in the power control parameter;

configuring MPE FR2 reporting corresponding to the carrier, and an MPE power back-off change corresponding to the TRP exceeding an uplink MPE power back-off change corresponding to the carrier in the power control parameter;

a timeout of an MPE reporting prohibition timer corresponding to the TRP on the carrier; or

a timeout of an MPE reporting prohibition timer corresponding to the carrier.

**24.** An apparatus for reporting a power headroom report, comprising:

a receiving module, configured to receive configuration information transmitted by a base station, wherein the configuration information instructs the UE to support power headroom report PHR reporting of one or more TRPs on one carrier;

wherein the receiving module is further configured to receive a power control parameter of at least one TRP corresponding to at least one carrier transmitted by the base station; and

the receiving module is further configured to receive a trigger condition for PHR reporting of at least one TRP transmitted by the base station; and
a reporting module, configured to trigger PHR reporting of at least two TRPs corresponding to each carrier based on the power control parameter and the trigger condition for reporting.

25. An apparatus for reporting a power headroom report, comprising:

   a transmitting module, configured to transmit configuration information to a UE, wherein the configuration information instructs the UE to support PHR reporting of one or more TRPs on one carrier;
   wherein the transmitting module is further configured to transmit a power control parameter of at least one TRP corresponding to at least one carrier to the UE; and
   the transmitting module is further configured to transmit a trigger condition for PHR reporting of at least one TRP to the UE; and
   a receiving module, configured to receive PHRs of at least two TRPs corresponding to each carrier transmitted by the UE.

26. A user equipment, comprising: a transceiver; a memory; a processor connected to the transceiver and the memory respectively, wherein the processor is configured to control wireless signal transmission and reception of the transceiver, and to enable implementing of the method of any one of claims 1 to 12, by executing computer-executable instructions on the memory.

27. A base station, comprising: a transceiver; a memory; a processor connected to the transceiver and the memory respectively, wherein the processor is configured to control wireless signal transmission and reception of the transceiver, and to enable implementing the method of any one of claims 13 to 23, by executing computer-executable instructions on the memory.

28. A computer storage medium, having stored thereon computer-executable instructions that, when executed by a processor, enable implementing the method of any one of claims 1-12 or 13-23.

configuration information transmitted by a base station is received — 101

a power control parameter of at least one TRP corresponding to at least one carrier transmitted by the base station is received — 102

a trigger condition for PHR reporting corresponding to at least one TRP transmitted by the base station is received — 103

PHR reporting of at least two TRPs corresponding to each carrier is triggered based on the power control parameter and the trigger condition for reporting — 104

FIG. 1

configuration information transmitted by a base station is received — 201

a power control parameter of one or more TRPs corresponding to at least one carrier transmitted by the base station is received — 202

a trigger condition for PHR reporting corresponding to one or more TRPs transmitted by the base station is received — 203

determining whether the UE satisfies the trigger condition for reporting based on the power control parameter and the trigger condition for reporting — 204

Y

a PHR of each TRP on each carrier is transmitted to the base station — 205

FIG. 2

configuration information transmitted by a base station is received — 301

a power control parameter of one or more TRPs corresponding to at least one carrier transmitted by the base station is received — 302

a trigger condition for PHR reporting corresponding to one or more TRPs transmitted by the base station is received — 303

— 304
determining whether the UE satisfies the trigger condition for reporting based on the power control parameter and the trigger condition for reporting

Y

the PHR of each TRP on each carrier is transmitted to the base station, and reported content of the PHR includes a relevant second power parameter — 305

FIG. 3a

| P | R | PH(Type1,PCell,TRP) |
| --- | --- | --- |
| MPE or R | | $P_{CMAX,f,c}$ 1 |
| P | R | PH(Type1,PCell,TRP) |
| MPE or R | | $P_{CMAX,f,c}$ 1 |

FIG. 3b

| $C_7$ | $C_6$ | $C_5$ | $C_4$ | $C_3$ | $C_2$ | $C_1$ | R |
|---|---|---|---|---|---|---|---|
| P | V | PH (Type2, SpCell of the other MAC entity, TRP) | | | | | |
| MPE or R | | $P_{CMAX,fc}$ 1 | | | | | |
| P | V | PH (Type2, SpCell of the other MAC entity, TRP) | | | | | |
| MPE or R | | $P_{CMAX,fc}$ 1 | | | | | |
| P | V | PH (Type1, PCell, TRP) | | | | | |
| MPE or R | | $P_{CMAX,fc}$ 2 | | | | | |
| P | V | PH (Type1, PCell, TRP) | | | | | |
| MPE or R | | $P_{CMAX,fc}$ 2 | | | | | |

...

| P | V | PH (Type X, Serving Cell n, TRP) | | | | | |
|---|---|---|---|---|---|---|---|
| MPE or R | | $P_{CMAX,fc}$ m | | | | | |
| P | V | PH (Type X, Serving Cell n, TRP) | | | | | |
| MPE or R | | $P_{CMAX,fc}$ m | | | | | |

FIG. 3c

| $C_7$ | $C_6$ | $C_5$ | $C_4$ | $C_3$ | $C_2$ | $C_1$ | R |
|---|---|---|---|---|---|---|---|
| $C_{15}$ | $C_{14}$ | $C_{13}$ | $C_{12}$ | $C_{11}$ | $C_{10}$ | $C_9$ | $C_8$ |
| $C_{23}$ | $C_{22}$ | $C_{21}$ | $C_{20}$ | $C_{19}$ | $C_{18}$ | $C_{17}$ | $C_{16}$ |
| $C_{31}$ | $C_{30}$ | $C_{29}$ | $C_{28}$ | $C_{27}$ | $C_{26}$ | $C_{25}$ | $C_{24}$ |
| P | V | PH (Type2, SpCell of the other MAC entity,TRP) | | | | | |
| MPE or R | | $P_{CMAX,f,c}$ 1 | | | | | |
| P | V | PH (Type2, SpCell of the other MAC entity,TRP) | | | | | |
| MPE or R | | $P_{CMAX,f,c}$ 1 | | | | | |
| P | V | PH (Type1,PCell,TRP) | | | | | |
| MPE or R | | $P_{CMAX,f,c}$ 2 | | | | | |
| P | V | PH (Type1,PCell,TRP) | | | | | |
| MPE or R | | $P_{CMAX,f,c}$ 2 | | | | | |

...

| P | V | PH (Type X,Serving Cell n,TRP) | | | | | |
|---|---|---|---|---|---|---|---|
| MPE or R | | $P_{CMAX,f,c}$ m | | | | | |
| P | V | PH (Type X,Serving Cell n,TRP) | | | | | |
| MPE or R | | $P_{CMAX,f,c}$ m | | | | | |

FIG. 3d

configuration information transmitted by a base station is received — 401

a power control parameter of one or more TRPs corresponding to at least one carrier transmitted by the base station is received — 402

a trigger condition for PHR reporting corresponding to one or more TRPs transmitted by the base station is received — 403

determining whether the UE satisfies the trigger condition for reporting based on the power control parameter and the trigger condition for reporting — 404

Y

a PHR of each TRP on each carrier is transmitted to the base station, and reported content of the PHR includes a relevant second power parameter and an identity of each TRP — 405

FIG. 4a

| P | TRP | PH (Type 1, PCell) |
|---|-----|---------------------|
| MPE or R | | $P_{CMAX,f,c}$ |
| P | TRP | PH (Type 1, PCell) |
| MPE or R | | $P_{CMAX,f,c}$ |

FIG. 4b

| $C_7$ | $C_6$ | $C_5$ | $C_4$ | $C_3$ | $C_2$ | $C_1$ | R |
|---|---|---|---|---|---|---|---|
| R | R | R | R | R | R | R | TRP |
| P | V | PH (Type 2, SpCell of the other MAC entity) | | | | | |
| MPE or R | | $P_{CMAX,fc}1$ | | | | | |
| R | R | R | R | R | R | R | TRP |
| P | V | PH (Type 2, SpCell of the other MAC entity) | | | | | |
| MPE or R | | $P_{CMAX,fc}1$ | | | | | |
| R | R | R | R | R | R | R | TRP |
| P | V | PH (Type 1, PCell) | | | | | |
| MPE or R | | $P_{CMAX,fc}2$ | | | | | |
| R | R | R | R | R | R | R | TRP |
| P | V | PH (Type 1, PCell) | | | | | |
| MPE or R | | $P_{CMAX,fc}2$ | | | | | |

...

| R | R | R | R | R | R | R | TRP |
|---|---|---|---|---|---|---|---|
| P | V | PH (Type X, Serving Cell n) | | | | | |
| MPE or R | | $P_{CMAX,fc}m$ | | | | | |
| R | R | R | R | R | R | R | TRP |
| P | V | PH (Type X, Serving Cell n) | | | | | |
| MPE or R | | $P_{CMAX,fc}m$ | | | | | |

FIG. 4c

| $C_7$ | $C_6$ | $C_5$ | $C_4$ | $C_3$ | $C_2$ | $C_1$ | R |
|---|---|---|---|---|---|---|---|
| $C_{15}$ | $C_{14}$ | $C_{13}$ | $C_{12}$ | $C_{11}$ | $C_{10}$ | $C_9$ | $C_8$ |
| $C_{23}$ | $C_{22}$ | $C_{21}$ | $C_{20}$ | $C_{19}$ | $C_{18}$ | $C_{17}$ | $C_{16}$ |
| $C_{31}$ | $C_{30}$ | $C_{29}$ | $C_{28}$ | $C_{27}$ | $C_{26}$ | $C_{25}$ | $C_{24}$ |
| R | R | R | R | R | R | R | TRP |
| P | V | PH (Type2, SpCell of the other MAC entity) | | | | | |
| MPE or R | | $P_{CMAX,fc}$ 1 | | | | | |
| R | R | R | R | R | R | R | TRP |
| P | V | PH (Type2, SpCell of the other MAC entity) | | | | | |
| MPE or R | | $P_{CMAX,fc}$ 1 | | | | | |
| R | R | R | R | R | R | R | TRP |
| P | V | PH (Type1,PCell) | | | | | |
| MPE or R | | $P_{CMAX,fc}$ 2 | | | | | |
| R | R | R | R | R | R | R | TRP |
| P | V | PH (Type1,PCell) | | | | | |
| MPE or R | | $P_{CMAX,fc}$ 2 | | | | | |

...

| R | R | R | R | R | R | R | TRP |
|---|---|---|---|---|---|---|---|
| P | V | PH (TypeX,Serving Cell n) | | | | | |
| MPE or R | | $P_{CMAX,fc}$ m | | | | | |
| R | R | R | R | R | R | R | TRP |
| P | V | PH (Type X,Serving Cell n) | | | | | |
| MPE or R | | $P_{CMAX,fc}$ m | | | | | |

FIG. 4d

configuration information transmitted by a base station is received — 501

a power control parameter of one or more TRPs corresponding to at least one carrier transmitted by the base station is received — 502

a trigger condition for PHR reporting corresponding to one or more TRPs transmitted by the base station is received — 503

determining whether the UE satisfies the trigger condition for reporting based on the power control parameter and the trigger condition for reporting — 504

Y

one TRP is selected from multiple TRPs corresponding to each carrier — 505

the PHR of one TRP corresponding to each carrier is reported to the base station — 506

FIG. 5

configuration information transmitted by a base station is received — 301

a power control parameter of one or more TRPs corresponding to at least one carrier transmitted by the base station is received — 302

a trigger condition for PHR reporting corresponding to one or more TRPs transmitted by the base station is received — 303

determining whether the UE satisfies the trigger condition for reporting based on the power control parameter and the trigger condition for reporting — 304

Y

one TRP is selected from multiple TRPs corresponding to each carrier — 305

the PHR of one TRP corresponding to each carrier is reported to the base station, reported content of the PHR of one TRP includes a relevant first power parameter — 306

FIG. 6a

| P | R | PH (Type 1, PCell) |
|---|---|---|
| MPE or R | | $P_{CMAX,f,c}$ |

FIG. 6b

| $C_7$ | $C_6$ | $C_5$ | $C_4$ | $C_3$ | $C_2$ | $C_1$ | R |
|---|---|---|---|---|---|---|---|
| P | V | PH (Type 2, PCell) | | | | | |
| R | R | $P_{CMAX,c}$ 1 | | | | | |
| P | V | PH (Type 1, PCell) | | | | | |
| R | R | $P_{CMAX,c}$ 2 | | | | | |
| P | V | PH (Type x, SCell 1) | | | | | |
| R | R | $P_{CMAX,c}$ 3 | | | | | |

| P | V | PH (Type x, SCell n) |
|---|---|---|
| R | R | $P_{CMAX,c}$ m |

FIG. 6c

| $C_7$ | $C_6$ | $C_5$ | $C_4$ | $C_3$ | $C_2$ | $C_1$ | R |
|---|---|---|---|---|---|---|---|
| $C_{15}$ | $C_{14}$ | $C_{13}$ | $C_{12}$ | $C_{11}$ | $C_{10}$ | $C_9$ | $C_8$ |
| $C_{23}$ | $C_{22}$ | $C_{21}$ | $C_{20}$ | $C_{19}$ | $C_{18}$ | $C_{17}$ | $C_{16}$ |
| $C_{31}$ | $C_{30}$ | $C_{29}$ | $C_{28}$ | $C_{27}$ | $C_{26}$ | $C_{25}$ | $C_{24}$ |
| P | V | PH (Type 2, SpCell of the other MAC entity) | | | | | |
| MPE or R | | $P_{CMAX,tc}$ 1 | | | | | |
| P | V | PH (Type 1, PCell) | | | | | |
| MPE or R | | $P_{CMAX,tc}$ 2 | | | | | |
| P | V | PH (Type X, Serving Cell 1) | | | | | |
| MPE or R | | $P_{CMAX,tc}$ 3 | | | | | |

| P | V | PH (Type X, Serving Cell n) | | | | | |
|---|---|---|---|---|---|---|---|
| MPE or R | | $P_{CMAX,tc}$ m | | | | | |

FIG. 6d

configuration information transmitted by a base station is received — 701

↓

a power control parameter of one or more TRPs corresponding to at least one carrier transmitted by the base station is received — 702

↓

a trigger condition for PHR reporting corresponding to one or more TRPs transmitted by the base station is received — 703

↓

determining whether the UE satisfies the trigger condition for reporting based on the power control parameter and the trigger condition for reporting — 704

↓ Y

one TRP is selected from multiple TRPs corresponding to the carrier — 705

↓

the PHR of one TRP is reported to the base station, reported content of the PHR of one TRP includes a relevant first power parameter and an identity of the one TRP — 706

FIG. 7a

| P | TRP | PH (Type 1, PCell) | | | | | |
|---|---|---|---|---|---|---|---|
| MPE or R | | $P_{CMAX,tc}$ | | | | | |

FIG. 7b

| $C_7$ | $C_6$ | $C_5$ | $C_4$ | $C_3$ | $C_2$ | $C_1$ | R |
|---|---|---|---|---|---|---|---|
| R | R | R | R | R | R | R | TRP |
| P | V | PH (Type 2, SpCell of the other MAC entity) | | | | | |
| MPE or R | | $P_{CMAX,tc}1$ | | | | | |
| R | R | R | R | R | R | R | TRP |
| P | V | PH (Type 1, PCell) | | | | | |
| MPE or R | | $P_{CMAX,tc}2$ | | | | | |
| R | R | R | R | R | R | R | TRP |
| P | V | PH (Type X, Serving Cell 1) | | | | | |
| MPE or R | | $P_{CMAX,tc}3$ | | | | | |

...

| R | R | R | R | R | R | R | TRP |
|---|---|---|---|---|---|---|---|
| P | V | PH (Type X, Serving Cell n) | | | | | |
| MPE or R | | $P_{CMAX,tc}m$ | | | | | |

FIG. 7c

| | | | | | | | |
|---|---|---|---|---|---|---|---|
| $C_7$ | $C_6$ | $C_5$ | $C_4$ | $C_3$ | $C_2$ | $C_1$ | R |
| $C_{15}$ | $C_{14}$ | $C_{13}$ | $C_{12}$ | $C_{11}$ | $C_{10}$ | $C_9$ | $C_8$ |
| $C_{23}$ | $C_{22}$ | $C_{21}$ | $C_{20}$ | $C_{19}$ | $C_{18}$ | $C_{17}$ | $C_{16}$ |
| $C_{31}$ | $C_{30}$ | $C_{29}$ | $C_{28}$ | $C_{27}$ | $C_{26}$ | $C_{25}$ | $C_{24}$ |
| R | R | R | R | R | R | R | TRP |
| P | V | PH (Type2, SpCell of the other MAC entity) | | | | | |
| MPE or R | | $P_{CMAX,fc}$ 1 | | | | | |
| R | R | R | R | R | R | R | TRP |
| P | V | PH (Type1, PCell) | | | | | |
| MPE or R | | $P_{CMAX,fc}$ 2 | | | | | |
| R | R | R | R | R | R | R | TRP |
| P | V | PH (Type X, Serving Cell 1) | | | | | |
| MPE or R | | $P_{CMAX,fc}$ 3 | | | | | |

...

| | | | | | | | |
|---|---|---|---|---|---|---|---|
| R | R | R | R | R | R | R | TRP |
| P | V | PH (Type X, Serving Cell n) | | | | | |
| MPE or R | | $P_{CMAX,fc}$ m | | | | | |

FIG. 7d

configuration information is transmitted to a UE — 801

a power control parameter of one or more TRPs corresponding to at least one carrier is transmitted to the UE — 802

a trigger condition for PHR reporting corresponding to one or more TRPs is transmitted to the UE — 803

PHR reporting of at least two TRPs corresponding to each carrier transmitted by the UE is received — 804

FIG. 8

configuration information is transmitted to a UE — 901

a power control parameter of one or more TRPs corresponding to at least one carrier is transmitted to the UE — 902

a trigger condition for PHR reporting corresponding to one or more TRPs is transmitted to the UE — 903

PHR reporting of each TRP corresponding to each carrier transmitted by the UE is received — 904

FIG. 9

configuration information is transmitted to a UE — 1001

a power control parameter of one or more TRPs corresponding to at least one carrier is transmitted to the UE — 1002

a trigger condition for PHR reporting corresponding to one or more TRPs is transmitted to the UE — 1003

PHR reporting of each TRP corresponding to each carrier transmitted by the UE is received, and reported content of the PHR includes a relevant second power parameter — 1004

FIG. 10

configuration information is transmitted to a UE — 1101

a power control parameter of one or more TRPs corresponding to at least one carrier is transmitted to the UE — 1102

a trigger condition for PHR reporting corresponding to one or more TRPs is transmitted to the UE — 1103

PHR reporting of each TRP corresponding to each carrier transmitted by the UE is received, and reported content of the PHR includes a relevant second power parameter and an identity of each TRP — 1104

FIG. 11

configuration information is transmitted to a UE — 1201

a power control parameter of one or more TRPs corresponding to at least one carrier is transmitted to the UE — 1202

a trigger condition for PHR reporting corresponding to one or more TRPs is transmitted to the UE — 1203

a sorting rule configured to sort each TRP is configured/indicated to the UE — 1204

PHR reporting of each TRP corresponding to each carrier transmitted by the UE is received — 1205

FIG. 12

configuration information is transmitted to UE — 1301

a power control parameter of one or more TRPs corresponding to at least one carrier is transmitted to the UE — 1302

a trigger condition for PHR reporting corresponding to one or more TRPs is transmitted to the UE — 1303

PHR reporting of one TRP corresponding to each carrier transmitted by the UE is received — 1304

FIG. 13

configuration information is transmitted to UE — 1401

a power control parameter of one or more TRPs corresponding to at least one carrier is transmitted to the UE — 1402

a trigger condition for PHR reporting corresponding to one or more TRPs is transmitted to the UE — 1403

PHR reporting of one TRP corresponding to each carrier transmitted by the UE is received, and reported content of the PHR of one TRP includes a relevant first power parameter — 1404

FIG. 14

configuration information is transmitted to UE — 1501

a power control parameter of one or more TRPs corresponding to at least one carrier is transmitted to the UE — 1502

a trigger condition for PHR reporting corresponding to one or more TRPs is transmitted to the UE — 1503

PHR reporting of one TRP corresponding to each carrier transmitted by the UE is received, and reported content of the PHR of one TRP includes a relevant first power parameter and an identity of the one TRP — 1504

FIG. 15

configuration information is transmitted to UE ⸺ 1601

a power control parameter of one or more TRPs corresponding to at least one carrier is transmitted to the UE ⸺ 1602

a trigger condition for PHR reporting corresponding to one or more TRPs is transmitted to the UE ⸺ 1603

a selection rule configured to select one TRP from the carrier is configured/indicated to the UE ⸺ 1604

PHR reporting of one TRP corresponding to each carrier transmitted by the UE is received ⸺ 1605

FIG. 16

1700

apparatus for reporting a power headroom report

1701

receiving module

1702

reporting module

FIG. 17

```
                              ┌─1800
┌─────────────────────────────────────┐
│   apparatus for reporting a          │
│   power headroom report      ┌─1801  │
│   ┌──────────────────────────┴──┐    │
│   │   transmitting module       │    │
│   └─────────────────────────────┘    │
│                              ┌─1802  │
│   ┌──────────────────────────┴──┐    │
│   │    receiving module         │    │
│   └─────────────────────────────┘    │
└─────────────────────────────────────┘
```

FIG. 18

FIG. 19

2000

2022 — processing component

power component — 2026

2032 — memory

network interface — 2050

I/O interface — 2058

FIG. 20

## INTERNATIONAL SEARCH REPORT

| | International application No. |
|---|---|
| | **PCT/CN2021/111317** |

**A. CLASSIFICATION OF SUBJECT MATTER**

H04W 52/36(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 功率余量报告, PHR, TRP, 发送接收点, 功率, 多, 配置, 触发, 参数, 基站, 用户, 终端, base station, configuration, multiple, parameter, power, UE, terminal, device, trigger

**C. DOCUMENTS CONSIDERED TO BE RELEVANT**

| Category* | Citation of document, with indication, where appropriate, of the relevant passages | Relevant to claim No. |
|---|---|---|
| X | US 2020100193 A1 (FG INNOVATION CO., LTD.) 26 March 2020 (2020-03-26) description, paragraphs 0041-0148, and claim 1 | 1-28 |
| X | WO 2018090537 A1 (HUAWEI TECHNOLOGIES CO., LTD.) 24 May 2018 (2018-05-24) description, page 6, line 31 to page 15, line 4 | 1-28 |
| A | US 2020267753 A1 (CONVIDA WIRELESS, LLC.) 20 August 2020 (2020-08-20) entire document | 1-28 |
| A | US 2021119688 A1 (NOKIA TECHNOLOGIES OY) 22 April 2021 (2021-04-22) entire document | 1-28 |
| A | CN 110536394 A (ZTE CORP.) 03 December 2019 (2019-12-03) entire document | 1-28 |
| A | SPREADTRUM COMMUNICATIONS. "3GPP TSG RAN WG1 #105-e R1-2104412" *Discussion on enhancements on Multi-TRP for PUCCH and PUSCH,* 27 May 2021 (2021-05-27), entire document | 1-28 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 April 2022** | **05 May 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/111317**

| Patent document cited in search report | | | Publication date (day/month/year) | Patent family member(s) | | | Publication date (day/month/year) |
|---|---|---|---|---|---|---|---|
| US | 2020100193 | A1 | 26 March 2020 | WO | 2020063560 | A1 | 02 April 2020 |
| WO | 2018090537 | A1 | 24 May 2018 | US | 2019281562 | A1 | 12 September 2019 |
| | | | | CN | 109479246 | A | 15 March 2019 |
| US | 2020267753 | A1 | 20 August 2020 | EP | 3530053 | A1 | 28 August 2019 |
| | | | | CN | 110024466 | A | 16 July 2019 |
| | | | | WO | 2018075828 | A1 | 26 April 2018 |
| | | | | JP | 2019532590 | A | 07 November 2019 |
| | | | | KR | 20190069518 | A | 19 June 2019 |
| US | 2021119688 | A1 | 22 April 2021 | PH | 12020551559 | A1 | 07 June 2021 |
| | | | | WO | 2019193581 | A2 | 10 October 2019 |
| | | | | CN | 112075029 | A | 11 December 2020 |
| | | | | KR | 20200140866 | A | 16 December 2020 |
| CN | 110536394 | A | 03 December 2019 | EP | 3952484 | A1 | 09 February 2022 |
| | | | | WO | 2020199956 | A1 | 08 October 2020 |

Form PCT/ISA/210 (patent family annex) (January 2015)